# EUROPEAN PATENT APPLICATION

(11) **EP 1 295 780 A2**
(43) Date of publication of application: **26.03.2003**
(21) Application number: 02020932.6
(22) Date of filing: 19.09.2002
(51) Int. Cl.: B62D 15/02, B62D 5/04

(54) **Rotational angle detecting device, torque detecting device and steering apparatus**

(30) Priority: 25.09.2001 JP 2001292534
(71) Applicant: KOYO SEIKO CO., LTD., Osaka 542-0081 (JP)
(72) Inventor: Kotaka, Kenichi, c/o Koyo Seiko Co., Ltd., Osaka 542-0081 (JP); Maeda, Naoki, c/o Koyo Seiko Co., Ltd., Osaka 542-0081 (JP); Tokumoto, Yoshitomo, c/o Koyo Seiko Co., Ltd., Osaka 542-0081 (JP)
(74) Representative: Selting, Günther, Dipl.-Ing.

(57) **Abstract**

A rotational angle detecting device constructed such that one or a plurality of targets 3 are provided on a rotational member 12 so that the first detecting means 1A outputs a detection signal according to the rotation of the rotational member 12, the second detecting means 1B outputs a detection signal whose phase is different from that of the first detecting means 1A, and the rotational angle of the rotational member 12 is detected based on the detection signals outputted by the first detecting means 1A and second detecting means 1B. It is possible to realize a rotational angle detecting device capable of detecting a rotational angle even when a sag portion exists in the characteristics of the detection signals of the detecting means and easily managing the accuracy of the detection signals of the detecting means at the manufacturing process, and realize a torque detecting device and steering apparatus using this rotational angle detecting device.

## Description

### BACKGROUND OF THE INVENTION

### 1. Field of the Invention

The present invention relates to a rotational angle detecting device, comprising a rotational member having one or a plurality of targets so that the first detecting means outputs a detection signal and second detecting means outputs a detection signal whose phase is different from that of the first detecting means, according to the rotation of the rotational member, for detecting the rotational angle of the rotational member based on the detection signals outputted by the first detecting means and second detecting means; a torque detecting device for detecting a torque applied to a first shaft based on a torsional angle generated in a connecting shaft which connects the first shaft and second shaft; and a steering apparatus for generating a steering assist force based on the result of the detection by this torque detecting device.

### 2. Description of Related Art

Some of steering apparatus for automobiles are constructed to reduce a driver's load by driving an electric motor to assist steering. Such a steering apparatus comprises an input shaft connected to a steering wheel; an output shaft connected to steering control wheels through a pinion and a rack; and a connecting shaft (a torsion bar) which connects the input shaft and the output shaft. A torque detecting device detects a steering torque applied to the input shaft based on a torsional angle generated in the connecting shaft. The steering assist electric motor interlocking with the output shaft is driven and controlled on the basis of the steering torque detected by the torque detecting device.

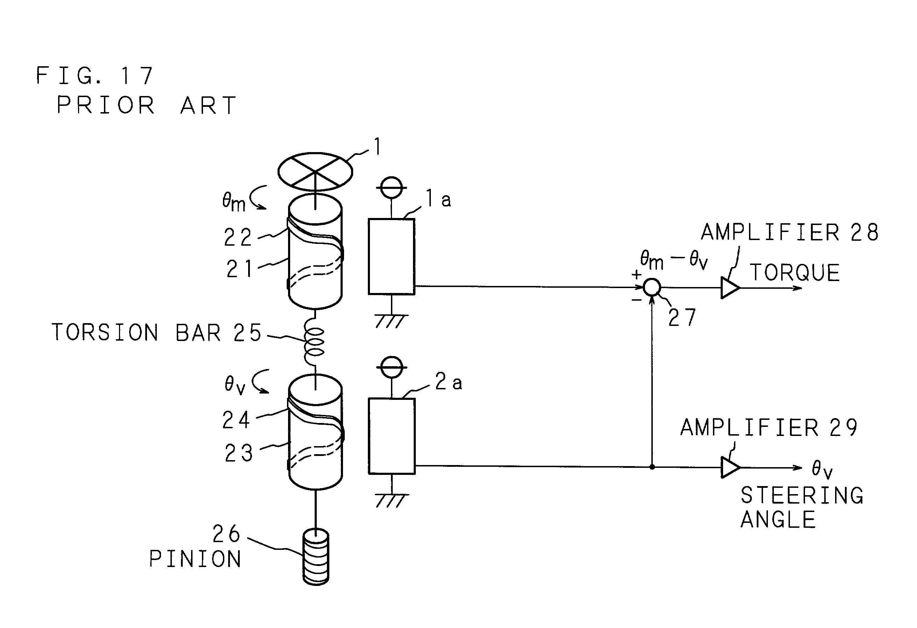

FIG. 17 is a principle view showing an example of the construction of an essential portion of a torque sensor (torque detecting device) which is proposed by the applicant of this application in Japanese Patent Application No. 11-100665 (1999). This torque detecting device is applied to a steering apparatus. A protrusion 22 made of magnetic material is spirally provided on the circumferential surface of an intermediate portion of an upper shaft (first shaft) 21 of a steering shaft having an upper end portion to which a steering wheel 1 is connected and a lower end portion to which a torsion bar 25 is connected. A magnetic sensor 1a (magneto-resistance effect element) is secured to a stationary portion of the body of an automobile, in parallel with the upper shaft 21 with an appropriate space therebetween, so as to detect the position of the protrusion 22 made of magnetic material that moves in an axial direction of the upper shaft 21 when the upper shaft 21 is rotated.

A lower shaft (second shaft) 23 of the steering shaft has an upper end portion connected to the torsion bar 25 and a lower end portion connected to a pinion 26. Similarly to the upper shaft 21, a protrusion 24 made of magnetic material is spirally provided on the circumferential surface of an intermediate portion of the lower shaft 23. Moreover, a magnetic sensor 2a (magneto-resistance effect element) is secured to a stationary portion of the body of the automobile, in parallel with the lower shaft 23 with an appropriate space therebetween, for detecting the position of the protrusion 24 made of magnetic material that moves in an axial direction of the lower shaft 23 when the lower shaft 23 is rotated.

For example, each of the magnetic sensors 1a and 2a comprises a voltage divider circuit composed of two magnetic resistors, and a bias magnet disposed on one side that does not face the steering shaft. The bias magnet magnifies the change of the magnetic field caused by the protrusions 22 and 24 made of magnetic material and enhances the magnetic field on the surface of the steering shaft so as to improve the sensitivity of the magnetic sensors 1a and 2a.

The output voltage of the magnetic sensor 1a is given to a subtraction circuit 27, while the output voltage of the magnetic sensor 2a is supplied to the subtraction circuit 27 and an amplifier 29. The output voltage of the amplifier 29 is outputted as a signal indicating the rotational angle (steering angle) of the steering shaft detected by the rotational angle detecting device comprising the lower shaft 23, the protrusion 24 made of magnetic material and the magnetic sensor 2a.

The output voltage of the subtraction circuit 27 is supplied to an amplifier 28. The output voltage of the amplifier 28 is outputted as a signal indicating the steering torque applied to the steering wheel 1, which was detected by the torque detecting device.

According to the rotation within a range of 0° ≤ θ < 360° of the upper shaft 21 and the lower shaft 23 of the torque detecting device constructed as described above, the protrusions 22 and 24 made of magnetic material which are closest to the detecting surfaces of the magnetic sensors 1a and 2a move in the axial direction of the upper shaft 21 and lower shaft 23. Since the protrusions 22 and 24 made of magnetic material are spirally provided on the circumferential surface of each of the upper shaft 21 and lower shaft 23, the positions of the protrusions 22 and 24, which are closest to the detecting surfaces of the magnetic sensors 1a and 2a, in the axial direction of the upper shaft 21 and lower shaft 23, and the rotational angle of each of the upper shaft 21 and lower shaft 23 can be made to correspond to each other.

For example, the output voltage of each of the magnetic sensors 1a and 2a and the rotational angle (steering angle) of each of the upper shaft 21 and the lower shaft 23 are set to have a similar linear relationship. When the upper shaft 21 and lower shaft 23 are rotated plural times, the output of each of the magnetic sensors 1a and 2a shows a voltage waveform having a period of 360°, and the rotational angles of the upper shaft 21 and lower shaft 23 can be detected from the output voltages of the respective magnetic sensors 1a and 2a.

Here, when a steering torque has been applied to the steering wheel 1 and, therefore, the torsion bar 25 has a torsional angle, the output voltage of each of the magnetic sensors 1a and 2a encounters a voltage difference corresponding to the torsional angle. The torsional angle can be obtained by calculating the voltage difference by the subtraction circuit 27, and a signal indicating the steering torque can be outputted from the amplifier 28.

Further, a signal indicating the rotational angle (steering angle) of the steering shaft which has been detected by the rotational angle detecting device comprising the lower shaft 23, the protrusion 24 made of magnetic material and the magnetic sensor 2a can be outputted from the amplifier 29.

However, the protrusions 22 and 24 (targets) juxtaposed on the outer circumferences of the upper shaft 21 and lower shaft 23 have a partially spiral form that inclines at a substantially equal angle with respect to the axial direction, and discontinuous portions corresponding to the number of protrusions juxtaposed in the circumferential direction exist. Therefore, nonlinearly-changed regions corresponding to the discontinuous portions appear in the outputs of the magnetic sensors 1a and 2a disposed to face the protrusions 22 and 24, and thus there is a problem that the detection of the rotational angle in such a region is unreliable. Hence, two magnetic sensors are arranged in each of two sets of rotational detecting devices for the upper shaft 21 and lower shaft 23, with phase shift in the circumferential direction of the corresponding targets. These sensors are selectively switched and used to enable stable detection of the rotational angle and the rotational torque over the entire circumference.

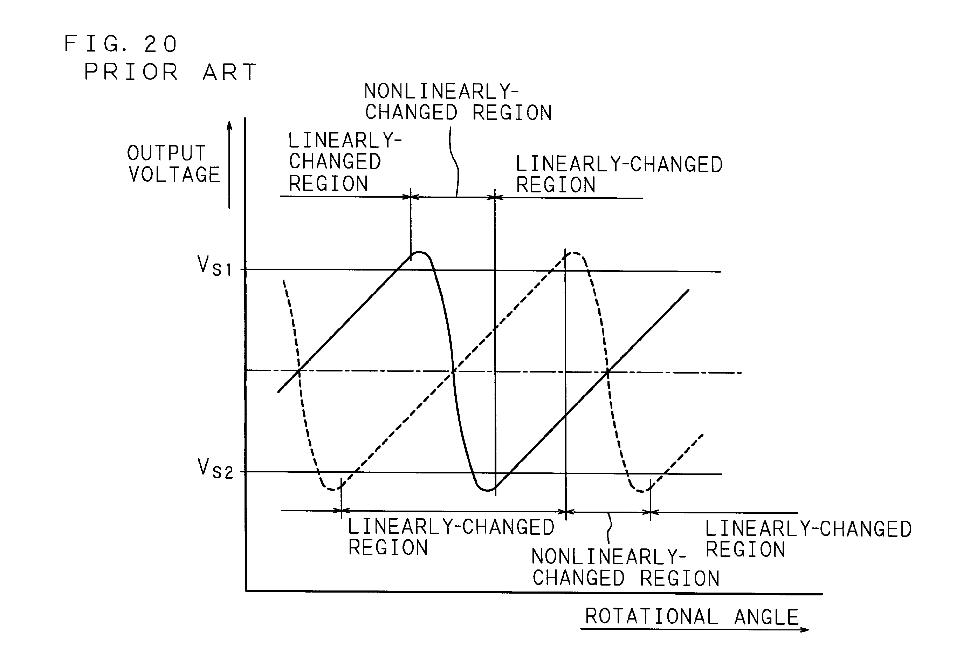

FIG. 20 is an explanatory view showing one example of a change state of the output voltages of the two magnetic sensors. The abscissa in FIG. 20 represents the rotational angle of the rotational shaft to be detected, the solid line in FIG. 20 shows the output voltage of one of the magnetic sensors, and the short dashed line indicates the output voltage of the other magnetic sensor. As shown in FIG. 20, one cycle of the output voltage of each magnetic sensor is the duration in which the rotational shaft rotates 360°/N (N is the number of the juxtaposed targets), and the output voltage shows a change state in which a lineally-changed portion corresponding to the passage of each target and a nonlinearly-changed region corresponding to the passage of a discontinuous portion between the targets repeatedly appear.

The mounting positions of the two magnetic sensors are determined so that they are different by an angle corresponding to substantially a half cycle of the output voltage. As a result, as shown in FIG. 20, the nonlinearly-changed region of the output voltage of one of the magnetic sensors is included in the linearly-changed region of the output voltage of the other magnetic sensor. Therefore, by switching the magnetic sensors, it is possible to use only the linearly-changed region that gives an output linearly corresponding to the change of the rotational angle and execute the detection of the rotational angle and the rotational torque with high accuracy.

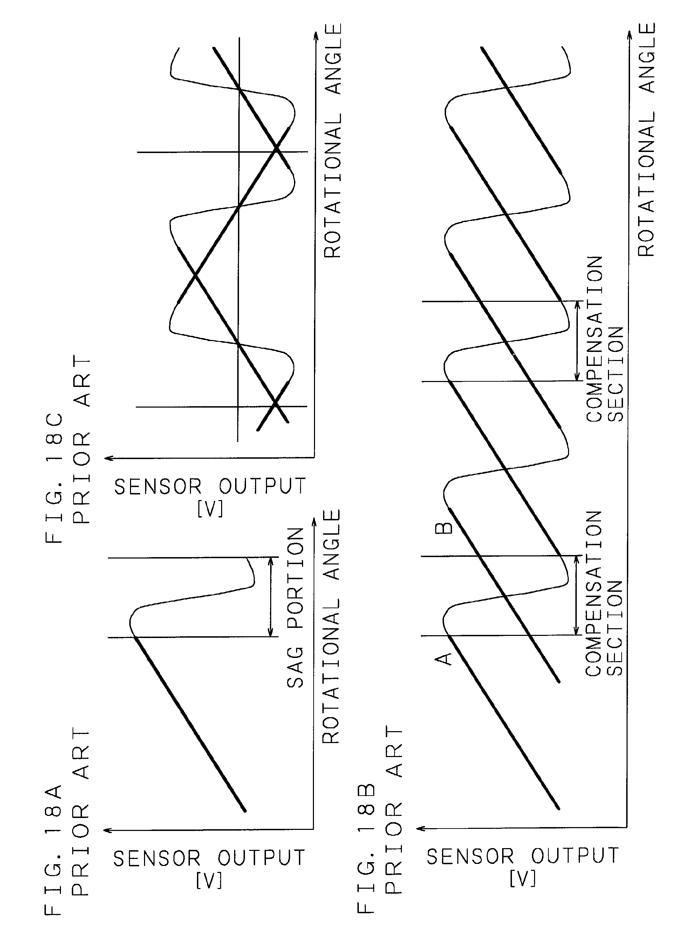

The torque detecting device as shown in FIG. 17 encounters a fact that each output voltage of the magnetic sensors 1a and 2a has a nonlinear form as shown in FIG. 18A because the characteristic of the output voltage is disordered between the start and end portions of each of the protrusions 22 and 24 made of magnetic material. Thus, there is a problem that a sag portion that cannot be used for the detection of the rotational angle and the detection of the torque is undesirably formed.

Therefore, as described above, a conventionally known method uses a plurality of magnetic sensors so that the phases of the output voltages are shifted as shown in FIG. 18B, whereby the output voltage of the sag portion is corrected (compensated).

Furthermore, as shown in FIG. 18C, for example, there is a method of detecting the absolute angle by introducing a phase difference of 180° into the output voltages of the two magnetic sensors, reversing one of the output voltages and comparing the two output voltages.

However, these methods cannot easily manage the accuracy of the intersection of the output voltages of the two magnetic sensors. For example, when the output voltages of the two magnetic sensors are handled with the accuracy of 10 bits, the accuracy of the output voltage at the intersection must be 0.1% or higher, and thus there is a problem that the accuracy of the output voltages of the magnetic sensors cannot be managed easily at the manufacturing process.

Besides, when the torque detecting device as described above is used in a steering apparatus for automobiles, if the torque detecting device has failure (disconnection of signal lines, etc.), there is a possibility of reverse assistance, and thus it is necessary to immediately stop the detection of torque. However, if the torque detection is immediately stopped to suddenly make the assist torque zero, another problem arises.

Besides, in the torque detecting device in which two magnetic sensors are arranged in the circumferential direction of the target, it is necessary to select an output of either of the magnetic sensors for the calculation of the rotational torque, based on the output voltages obtained as shown in FIG. 20. Conventionally, as shown in FIG. 20, this selection is made through the processes of presetting the upper and lower threshold voltages V_{S1} and V_{S2} and performing switching from the magnetic sensor in use to the other magnetic sensor when the output voltage of the magnetic sensor in use becomes higher than the threshold voltage V_{S1} or lower than the threshold voltage V_{S2}.

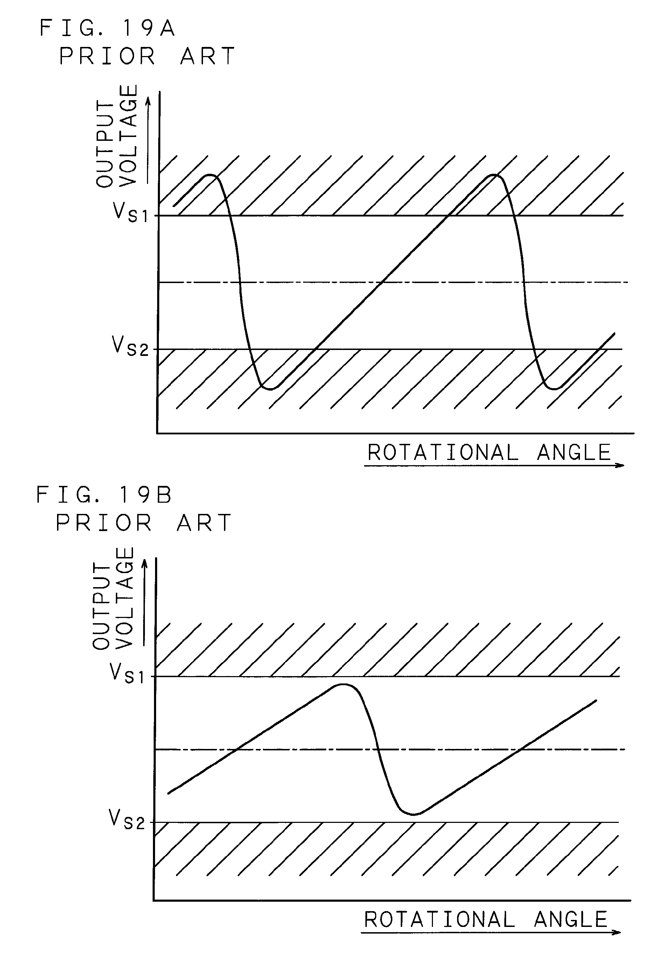

However, it has been known that the output characteristics of magnetic sensors used as the magnetic sensors are not constant and are largely changed especially by the effect of ambient temperature, and there have been cases that satisfactory switching was not performed by the above-described selection. FIG. 19A and FIG. 19B are explanatory views for the problems of the conventional selecting processes, and briefly show the change state of the output voltage of one magnetic sensor.

The change of the output characteristic due to the effect of ambient temperature appears as an increase/decrease in the change rate (inclination) of the output voltage in the linearly-changed region. FIG. 19A and FIG. 19B show the state of an increase in the change rate and the state of a decrease in the change rate, respectively.

The threshold voltages V_{S1} and V_{S2} for use in the conventional selection are set for a standard output characteristic. When the threshold voltages V_{S1} and V_{S2} are used in the state of FIG. 19A, as shown by hatching in FIG. 19A, both end portions of the linearly-changed region are cut off over a wide range and switching to the other magnetic sensor is performed while the output of the magnetic sensor in use is in the nonlinearly-changed region. Thus, there is a problem that the accuracy of the rotational torque detected immediately after the switching is lowered. Moreover, in the state of FIG. 19B, the maximum and minimum values of the actual output voltages do not reach the threshold voltages V_{S1} and V_{S2} as shown in FIG. 19B, and thus there is a possibility that the switching to the other magnetic sensor is not carried out.

Such problems are alleviated by increasing/decreasing the threshold voltages for use in switching, according to ambient temperature. However, in order to achieve this, it is necessary to measure the temperature of the periphery of the magnetic sensors, and consequently the structure of the control system becomes complicated. Moreover, the change in the output characteristics of the magnetic sensors is caused not only by the effect of ambient temperature, and the output characteristics of a plurality of magnetic sensors to be used are different from each other. Therefore, it is not sure that the magnetic sensor outputting an effective output in a linearly-changed region is certainly selected.

### BRIEF SUMMARY OF THE INVENTION

The present invention has been made with the aim of solving the above problems.

It is an object of the first through sixth inventions to provide a rotational angle detecting device capable of detecting a rotational angle even when a sag portion exists in the characteristics of the detection signals of detecting means and easily managing the accuracy of the detection signals of the detecting means at the manufacturing process.

It is an object of the seventh through tenth and twelfth inventions to provide a torque detecting device capable of detecting a torque even when a sag portion exists in the characteristics of the detection signals of detecting means and easily managing the accuracy of the detection signals of the detecting means at the manufacturing process.

It is an object of the eleventh invention to provide a torque detecting device that does not stop the detection of torque even when failure occurred.

It is an object of the thirteenth invention to provide a steering apparatus capable of detecting a torque even when a sag portion exists in the characteristics of the detection signals of detecting means of a torque detecting device and easily managing the accuracy of the detection signals of the detecting means at the manufacturing process of the torque detecting device.

A rotational angle detecting device according to the first invention is characterized in that one or a plurality of targets are provided on a rotational member so that first detecting means outputs a detection signal according to a rotation of the rotational member, second detecting means outputs a detection signal whose phase is different from the detection signal of the first detecting means, and a rotational angle of the rotational member is detected based on the detection signals outputted by respective first detecting means and the second detecting means.

In this rotational angle detecting device, one or a plurality of targets are provided on the rotational member so that the first detecting means outputs a detection signal according to the rotation of the rotational member, and the second detecting means outputs a detection signal whose phase is different from the detection signal of the first detecting means. The rotational angle of the rotational member is detected based on the detection signals outputted by respective first detecting means and the second detecting means.

Accordingly, it is possible to realize a rotational angle detecting device capable of detecting the rotational angle even when a sag portion exists in the characteristics of the detection signals of the detecting means and easily managing the accuracy of the detection signals of the detecting means at the manufacturing process.

A rotational angle detecting device according to the second invention is characterized in that the targets are made of protrusions provided at substantially equal intervals in a circumferential direction of the rotational member.

In this rotational angle detecting device, since the targets are made of the protrusions provided at substantially equal intervals in a circumferential direction of the rotational member, it is possible to realize a rotational angle detecting device capable of detecting the rotational angle even when a sag portion exists in the characteristics of the detection signals of the detecting means and easily managing the accuracy of the detection signals of the detecting means at the manufacturing process.

A rotational angle detecting device according to the third invention is characterized in that the targets are made of non-dent portions between dents that are formed at substantially equal intervals in a circumferential direction of the rotational member so as to form the non-dent portions.

In this rotational angle detecting device, since the targets are made of the non-dent portions between the dents that are formed at substantially equal intervals in a circumferential direction of the rotational member so as to form the non-dent portions, it is possible to realize a rotational angle detecting device capable of detecting the rotational angle even when a sag portion exists in the characteristics of the detection signals of the detecting means and easily managing the accuracy of the detection signals of the detecting means at the manufacturing process.

A rotational angle detecting device according to the fourth invention is characterized in that the targets are magnetized so that magnetic poles reverse at substantially equal intervals in a circumferential direction of the rotational member.

In this rotational angle detecting device, since the targets are magnetized so that the magnetic poles reverse at substantially equal intervals in a circumferential direction of the rotational member, it is possible to realize a rotational angle detecting device capable of detecting the rotational angle even when a sag portion exists in the characteristics of the detection signals of the detecting means and easily managing the accuracy of the detection signals of the detecting means at the manufacturing process.

A rotational angle detecting device according to the fifth invention is characterized by further comprising: judging means for judging a relation in magnitude between detection signals outputted by the first detecting means and the second detecting means respectively in the previous cycle of sampling and a relation in magnitude between detection signals outputted by the first detecting means and the second detecting means respectively in this cycle of sampling; judging means for judging whether the detection signal outputted by the first detecting means or the second detecting means in this cycle of sampling is greater or less than a substantially middle value between maximum and minimum values to be taken by the detection signals; and judging means for judging whether or not each of the detection signals outputted by the first detecting means and the second detecting means in this cycle of sampling is within a predetermined range; whereby a displacement angle in the direction of rotation of the rotational member is detected based on the results of the judgments by the respective judging means.

In this rotational angle detecting device, the judging means judges a relation in magnitude between detection signals outputted by the first detecting means and the second detecting means respectively in the previous cycle of sampling and a relation in magnitude between detection signals outputted by the first detecting means and the second detecting means respectively in this cycle of sampling, and another judging means judges whether the detection signal outputted by the first detecting means or the second detecting means in this cycle of sampling is greater or less than the substantially middle value between the maximum and minimum values to be taken by the detection signals. Further, still another judging means judges whether or not each of the detection signals outputted by the first detecting means and the second detecting means in this cycle of sampling is within a predetermined range, and the displacement angle in the direction of rotation of the rotational member is detected based on the results of the judgments by the respective judging means.

Accordingly, it is possible to realize a rotational angle detecting device capable of detecting the rotational angle even when a sag portion exists in the characteristics of the detection signals of the detecting means and easily managing the accuracy of the detection signals of the detecting means at the manufacturing process.

A rotational angle detecting device according to the sixth invention is characterized by further comprising: selecting means for selecting either of the first detecting means and the second detecting means and either of an increasing state and a decreasing state of a detection signal value to be outputted by the detecting means, based on the results of the judgments by the respective judging means, whereby a displacement angle in the direction of rotation of the rotational member is detected based on the detecting means and the state of the detection signal value selected by the selecting means in the previous cycle of sampling and the detection signals outputted by the selected detecting means in the previous cycle of sampling and this cycle of sampling respectively.

In this rotational angle detecting device, the selecting means selects either of the first detecting means and the second detecting means and either of an increasing state and a decreasing state of a detection signal value to be outputted by the detecting means, based on the results of the judgments by the respective judging means, and the displacement angle in the direction of rotation of the rotational member is detected based on the detecting means and the state of the detection signal value selected by the selecting means in the previous cycle of sampling and the detection signals outputted by the detecting means in the previous cycle of sampling and this cycle of sampling respectively.

Accordingly, it is possible to realize a rotational angle detecting device capable of detecting the rotational angle even when a sag portion exists in the characteristics of the detection signals of the detecting means and easily managing the accuracy of the detection signals of the detecting means at the manufacturing process.

A torque detecting device according to the seventh invention is characterized by comprising the rotational angle detecting device of any one of the first through sixth inventions for each of a first shaft and a second shaft which are connected by a connecting shaft, whereby a torque applied to the first shaft is detected based on the difference between detection signals outputted by the first detecting means or the second detecting means of each of the rotational angle detecting devices due to torsion generated in the connecting shaft.

This torque detecting device comprises the rotational angle detecting device of any one of the first through sixth inventions for each of the first shaft and the second shaft which are connected by the connecting shaft, and detects a torque applied to the first shaft based on the difference between detection signals outputted by the first detecting means or the second detecting means of each of the rotational angle detecting devices due to torsion generated in the connecting shaft. Accordingly, it is possible to realize a torque detecting device capable of detecting the torque even when a sag portion exists in the characteristics of the detection signals of the detecting means and easily managing the accuracy of the detection signals of the detecting means at the manufacturing process.

A torque detecting device according to the eighth invention is characterized by further comprising: sign judging means for judging a sign of each of the difference between the detection signals outputted by the first detecting means and the difference between the detection signals outputted by the second detecting means; and first comparing means for comparing the magnitudes of the detection signals outputted by each of the first detecting means and second detecting means on the first shaft side when the sign judging means judged that the signs of the differences were identical; whereby a torque applied to the first shaft is detected based on a result of comparison by the first comparing means.

In this torque detecting device, the sign judging means judges the sign of each of the difference between the detection signals outputted by the first detecting means and the difference between the detection signals outputted by the second detecting means, the first comparing means compares the magnitudes of the detection signals outputted by each of the first detecting means and the second detecting means on the first shaft side when the sign judging means judged that the signs of the differences were identical, and the torque applied to the first shaft is detected based on the result of the comparison by the first comparing means.

Accordingly, it is possible to realize a torque detecting device capable of detecting the torque even when a sag portion exists in the characteristics of the detection signals of the detecting means and easily managing the accuracy of the detection signals of the detecting means at the manufacturing process.

A torque detecting device according to the ninth invention is characterized by further comprising second comparing means for comparing the magnitudes of a substantially middle value between maximum and minimum values to be taken by the detection signals and each of the detection signals outputted by the first detecting means and second detecting means on the first shaft side when the sign judging means judged that the signs of the differences were different, whereby a torque applied to the first shaft is detected based on a result of comparison by the second comparing means.

In this torque detecting device, the second comparing means compares the magnitudes of the substantially middle value between the maximum and minimum values to be taken by the detection signals and each of the detection signals outputted by the first detecting means and second detecting means on the first shaft side when the sign judging means judged that the signs of the differences were different, and the torque applied to the first shaft is detected based on the result of the comparison by the second comparing means. Accordingly, it is possible to realize a torque detecting device capable of detecting the torque even when a sag portion exists in the characteristics of the detection signals of the detecting means and easily managing the accuracy of the detection signals of the detecting means at the manufacturing process.

A torque detecting device according to the tenth invention is characterized by further comprising: first judging means for judging whether or not at least one of the detection signals outputted by the first detecting means is out of a predetermined range; second judging means for judging whether or not at least one of the detection signals outputted by the second detecting means is out of a predetermined range; and third comparing means for comparing the magnitudes of an absolute value of the difference between the detection signals outputted by the first detecting means and an absolute value of the difference between the detection signals outputted by the second detecting means; whereby a torque applied to the first shaft is detected based on a result of comparison by the second comparing means, a result of judgment by the first judging means, a result of judgment by the second judging means, and a result of comparison by the third comparing means.

In this torque detecting device, the first judging means judges whether or not at least one of the detection signals outputted by the first detecting means is out of a predetermined range, and the second judging means judges whether or not at least one of the detection signals outputted by the second detecting means is out of a predetermined range. The third comparing means compares the magnitudes of the absolute value of the difference between the detection signals outputted by the first detecting means and the absolute value of the difference between the detection signals outputted by the second detecting means. The torque applied to the first shaft is detected based on the result of the comparison by the second comparing means, the result of the judgment by the first judging means, the result of the judgment by the second judging means, and the result of the comparison by the third comparing means.

Accordingly, it is possible to realize a torque detecting device capable of detecting the torque even when a sag portion exists in the characteristics of the detection signals of the detecting means and easily managing the accuracy of the detection signals of the detecting means at the manufacturing process.

A torque detecting device according to the eleventh invention is characterized by further comprising: abnormality detecting means for detecting abnormality of detection signals outputted by each of a pair of the first detecting means and a pair of the second detecting means; and means, when an abnormality was detected in one of the detection signals by the abnormality detecting means, for making the difference between the detection signals outputted by the pair of detecting means including the detecting means which outputted an abnormal detection signal zero; whereby, when there is one abnormal detection signal, a torque applied to the first shaft is detected without using the one detection signal.

In this torque detecting device, the abnormality detecting means detects abnormality of detection signals outputted by each of a pair of the first detecting means and a pair of the second detecting means, and the means for making a difference zero makes the difference between the detection signals outputted by one pair of the detecting means including detecting means which outputted the abnormal detection signal zero, whereby, when the abnormality was detected in one of the detection signals, a torque applied to the first shaft is detected without using the one detection signal.

Accordingly, it is possible to realize a torque detecting device that does not stop the detection of torque even when failure occurred.

A torque detecting device according to the twelfth invention is characterized by further comprising: storing means for storing the detection signals outputted by the first detecting means and the second detecting means and preset detection signals to be outputted according to each of the detection signals outputted by the first detecting means and the second detecting means, in association with each other; and means for outputting the detection signals to be outputted, based on the detection signals outputted by the first detecting means and the second detecting means and contents stored in each of the storing means; whereby detection signals outputted by the means are made detection signals outputted by the first detecting means and the second detecting means respectively.

In this torque detecting device, the respective storing means stores the detection signals outputted by the first detecting means and the second detecting means and preset detection signals to be outputted according to the detection signals outputted by the first detecting means and the second detecting means, in association with each other. The outputting means outputs the detection signals to be outputted, based on the detection signals outputted by the first detecting means and the second detecting means and the contents stored in each of the storing means, and detection signals outputted by the outputting means are made detection signals outputted by the first detecting means and the second detecting means respectively.

Accordingly, it is possible to realize a torque detecting device capable of detecting the torque even when a sag portion exists in the characteristics of the detection signals of the detecting means and easily managing the accuracy of the detection signals of the detecting means at the manufacturing process.

A steering apparatus according to the thirteenth invention is characterized by comprising: a first shaft connected to a steering wheel; a second shaft connected to a steering mechanism; a connecting shaft connecting the first shaft and the second shaft; and the torque detecting device of any one of the seventh through twelfth inventions for detecting a steering torque applied to the first shaft, based on a torsional angle generated in the connecting shaft; whereby steering is assisted according to the steering torque detected by the torque detecting device.

In this steering apparatus, the first shaft is connected to the steering wheel, the second shaft is connected to the steering mechanism, and the connecting shaft connects the first shaft and the second shaft. The torque detecting device of any one of the seventh through twelfth inventions detects a steering torque applied to the first shaft, based on a torsional angle generated in the connecting shaft, and steering is assisted according to the steering torque detected by the torque detecting device.

Accordingly, it is possible to realize a steering apparatus capable of detecting the torque even when a sag portion exists in the characteristics of the detection signals of the detecting means of the torque detecting device and easily managing the accuracy of the detection signals of the detecting means at the manufacturing process of the torque detecting device.

The above and further objects and features of the invention will more fully be apparent from the following detailed description with accompanying drawings.

### BRIEF DESCRIPTION OF THE SEVERAL VIEWS OF THE DRAWINGS

FIG. 1 is a schematic view showing schematically the construction of an embodiment of a rotational angle detecting device, torque detecting device and steering apparatus according to the present invention;
FIG. 2A and FIG. 2B are flow charts showing the operations of the rotational angle detecting device and torque detecting device according to the present invention;
FIG. 3A and FIG. 3B are flow charts showing the operations of the rotational angle detecting device and torque detecting device according to the present invention;
FIG. 4 is a flow chart showing the operations of the rotational angle detecting device and torque detecting device according to the present invention;
FIG. 5 is a waveform chart showing the detection signals of magnetic sensors;
FIG. 6 is a flow chart showing the operation of the torque detecting device according to the present invention;
FIG. 7A and FIG. 7B are flow charts showing the operation of the torque detecting device according to the present invention;
FIG. 8 is a flow chart showing the operation of the torque detecting device according to the present invention;
FIG. 9 is a waveform chart showing the detection signals of magnetic sensors;
FIG. 10 is a waveform chart showing the detection signals of magnetic sensors;
FIG. 11 is a flow chart showing the operation of the torque detecting device according to the present invention;
FIG. 12 is a waveform chart showing the detection signals of magnetic sensors;
FIG. 13 is a waveform chart showing the detection signals of magnetic sensors;
FIG. 14 is a schematic view showing schematically the construction of an embodiment of a rotational angle detecting device, torque detecting device and steering apparatus according to the present invention;
FIG. 15 is a schematic view showing schematically the construction of an embodiment of a rotational angle detecting device, torque detecting device and steering apparatus according to the present invention;
FIG. 16 is a schematic view showing schematically the construction of an embodiment of a rotational angle detecting device, torque detecting device and steering apparatus according to the present invention;
FIG. 17 is a principle view showing an example of the construction of an essential portion of a conventional torque detecting device;
FIG. 18A, FIG. 18B and FIG. 18C are explanatory views for explaining the operation of the conventional torque detecting device;
FIG. 19A and FIG. 19B are explanatory views for explaining the problems of selecting process of a conventional magnetic sensor; and
FIG. 20 is an explanatory view for explaining the operation of the conventional torque detecting device.

### DETAILED DESCRIPTION OF THE PREFERRED EMBODIMENTS

The following description will explain the present invention with reference to the drawings illustrating some embodiments thereof.

### Embodiment 1

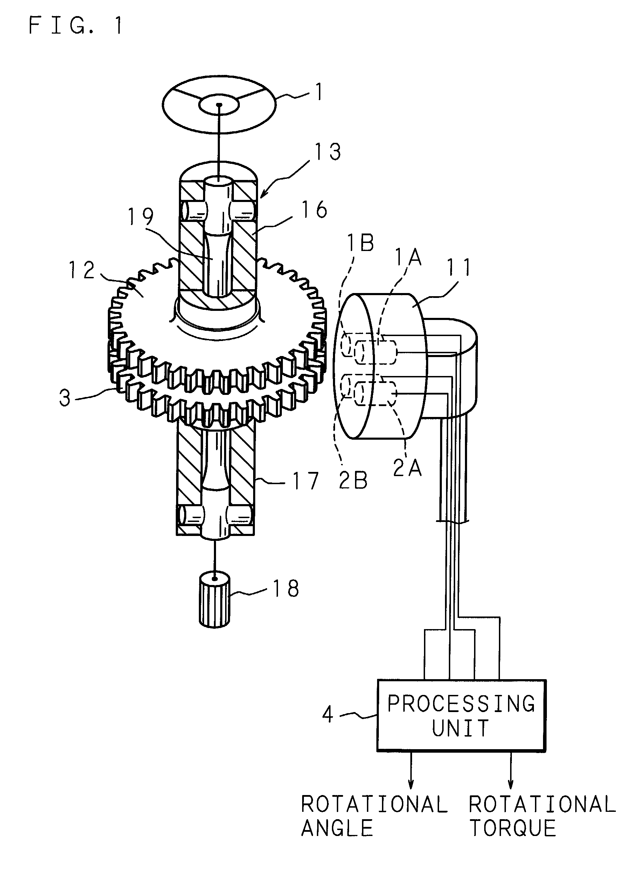

FIG. 1 is a schematic view showing schematically the construction of Embodiment 1 of a rotational angle detecting device, torque detecting device and steering apparatus according to the present invention. These rotational angle detecting device and torque detecting device are applied to a steering apparatus for automobiles, in which a steering shaft 13 for connecting a steering wheel 1 and a steering mechanism is constructed by connecting coaxially an input shaft (first shaft) 16 having an upper end portion to which the steering wheel 1 is connected and an output shaft 17 having a lower end portion to which a pinion 18 of the steering mechanism is connected to each other through a torsion bar (connecting shaft) 19 with a small diameter, and the periphery of the connecting portion between the input shaft 16 and output shaft 17 is constructed as follows.

A disc-shaped target plate (rotational member) 12 is coaxially fitted and secured on the input shaft 16 at a position adjacent to one end portion connected to the output shaft 17, and, for example, 36 targets 3 that are protrusions made of magnetic material are provided on the outer circumferential surface of the target plate 12 so that they protrude at equal intervals in the circumferential direction.

The targets 3 are made of teeth of a spur gear having an involute tooth profile, and the ring-shaped spur gear form the target plate 12 and targets 3.

A target plate 12 with targets 3 similar to the one described above is also fitted and secured on the output shaft 17 at a position adjacent to one end portion connected to the input shaft 16. The targets 3 of the target plate 12 on the output shaft 17 side and the targets 3 of the target plate 12 on the input shaft 16 side are aligned and juxtaposed in the circumferential direction.

Further, it is also possible to use the input shaft 16 and output shaft 17 made of magnetic material and form the teeth by gear-cutting the circumferential surfaces of the input shaft 16 and output shaft 17.

A sensor box 11 is disposed outside of both the target plates 12 so that it faces the outer edges of the targets 3 on the outer circumference of the target plates 12. The sensor box 11 is fixedly supported on a stationary portion, such as a housing that supports the input shaft 16 and output shaft 17. Magnetic sensors 1A (first detecting means) and 1B (second detecting means) facing different portions in the circumferential direction of the targets 3 on the input shaft 16 side and magnetic sensors 2A (first detecting means) and 2B (second detecting means) facing different portions in the circumferential direction of the targets 3 on the output shaft 17 side are stored in the sensor box 11 so that their positions in the circumferential direction are correctly aligned.

Each of the magnetic sensors 1A, 2A, 1B, 2B is a sensor constructed using an element having an electrical characteristic (resistance) varying as a result of the function of a magnetic field, such as a magneto-resistance effect element (MR element), so that the detection signal changes according to an adjacent portion of the facing target 3. The detection signals of these sensors are supplied to a processing unit 4 formed by a microprocessor provided outside or inside the sensor box 11.

Each of the magnetic sensors 1A, 2A, 1B, 2B outputs a detection signal approximately to a triangular wave or sine wave according to the passage of each target 3. In this detection signal, a maximum nonlinear change rate is marked near the transitions from rise to fall or from fall to rise, but the detection signal can be compensated by the following signal processing method.

The following description will explain the operations of the rotational angle detecting device and torque detecting device having such structures.

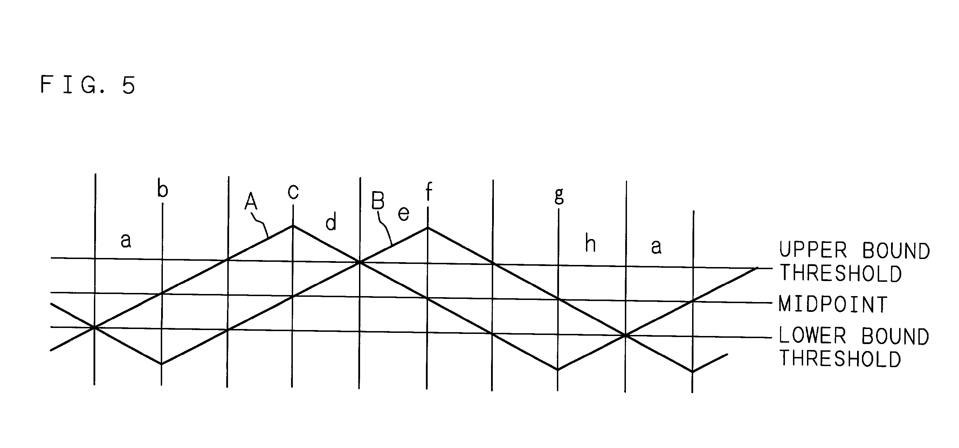

Each of the magnetic sensors 1A and 1B (2A and 2B) outputs a detection signal rising and falling (represented as A, B) in accordance with a change in the rotational angle of the input shaft 16 (output shaft 17) as shown in FIG. 5 while a corresponding target 3 is passing a position facing the sensor.

The detection signals of the magnetic sensors 1A and 1B correspond to the rotational angle of the input shaft 16 having the targets 3 corresponding to the magnetic sensors 1A and 1B, while the detection signals of the magnetic sensors 2A and 2B correspond to the rotational angle of the output shaft 17 having the targets 3 corresponding to the magnetic sensors 2A and 2B.

Therefore, the processing unit 4 can calculate the rotational angle of the input shaft 16 from the detection signals of the magnetic sensors 1A and 1B, and thus the processing unit 4 and magnetic sensors 1A, 1B act as a rotational angle detecting device for the input shaft 16. Further, the processing unit 4 can calculate the rotational angle of the output shaft 17 from the detection signals of the magnetic sensors 2A and 2B, and thus the processing unit 4 and magnetic sensors 2A, 2B act as a rotational angle detecting device for the output shaft 17.

When a rotational torque applies to the input shaft 16, a difference between the detection signals of the magnetic sensors 1A, 1B and the detection signals of the magnetic sensors 2A, 2B is generated.

The magnetic sensors 1A, 2A and the magnetic sensors 1B, 2B have a phase difference of 90° in the electrical angle, for example, in the circumferential direction of the target plates 12. A maximum nonlinear change rate is marked at the maximum and minimum values of the detection signals, which are the transition points to rise or fall. However, since the detection signals have different phases, they can be mutually compensated. If the compensation is possible, the angle of the phase difference can have any electrical angle between 1° and 360°.

Here, the difference between the detection signal of the magnetic sensor 1A and the detection signal of the magnetic sensor 2A, or the difference between the detection signal of the magnetic sensor 1B and the detection signal of the magnetic sensor 2B, corresponds to the difference in the rotational angles between the input shaft 16 and output shaft 17 (relative angular displacement). This relative angular displacement corresponds to the torsional angle generated in the torsion bar 19 which connects the input shaft 16 and the output shaft 17, under the function of the rotational torque applied to the input shaft 16. It is therefore possible to calculate the rotational torque applied to the input shaft 16, based on the above-mentioned difference between the detection signals.

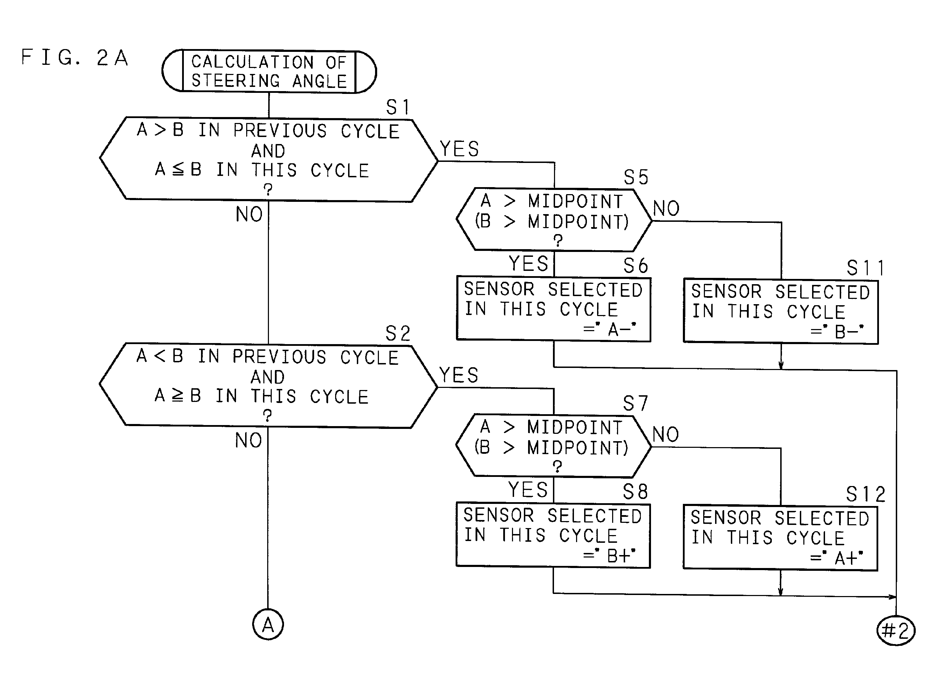

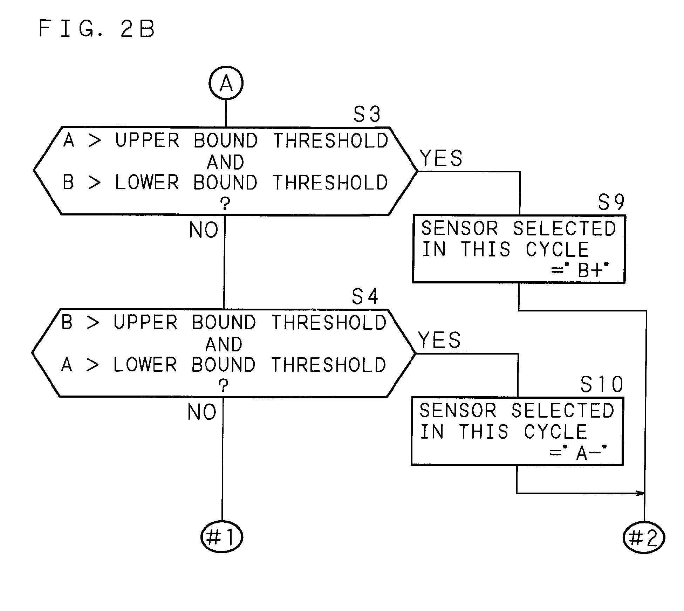

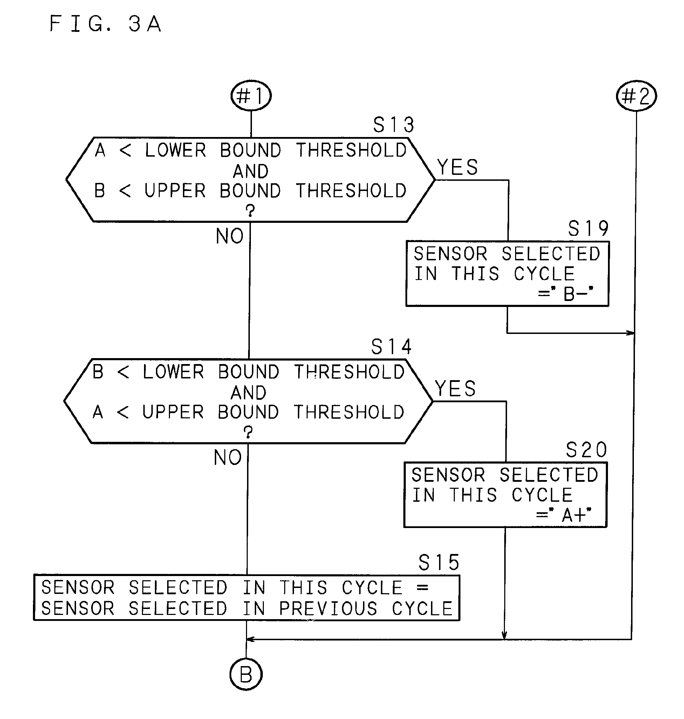

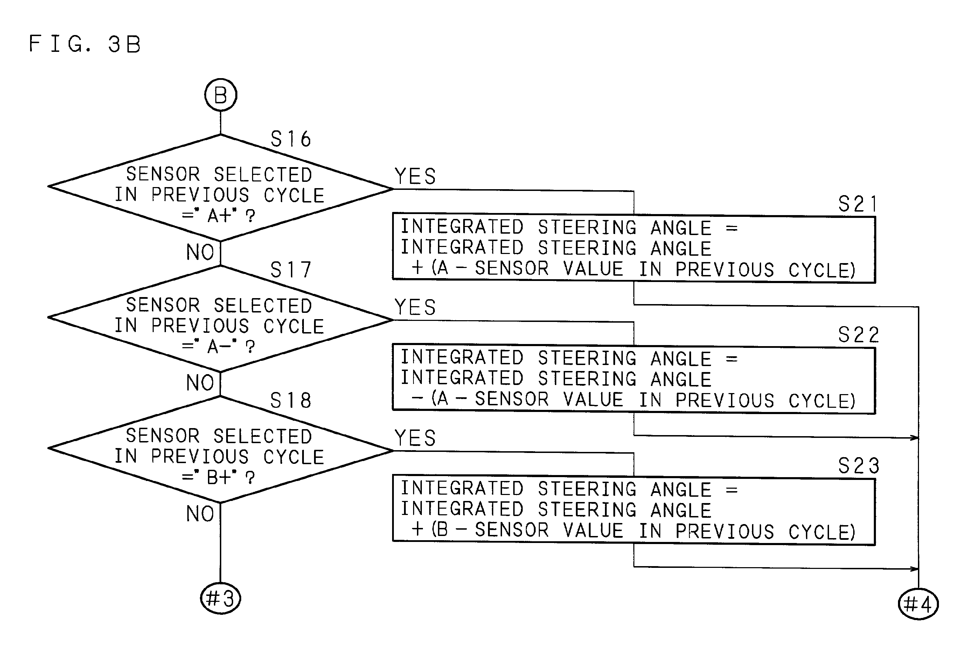

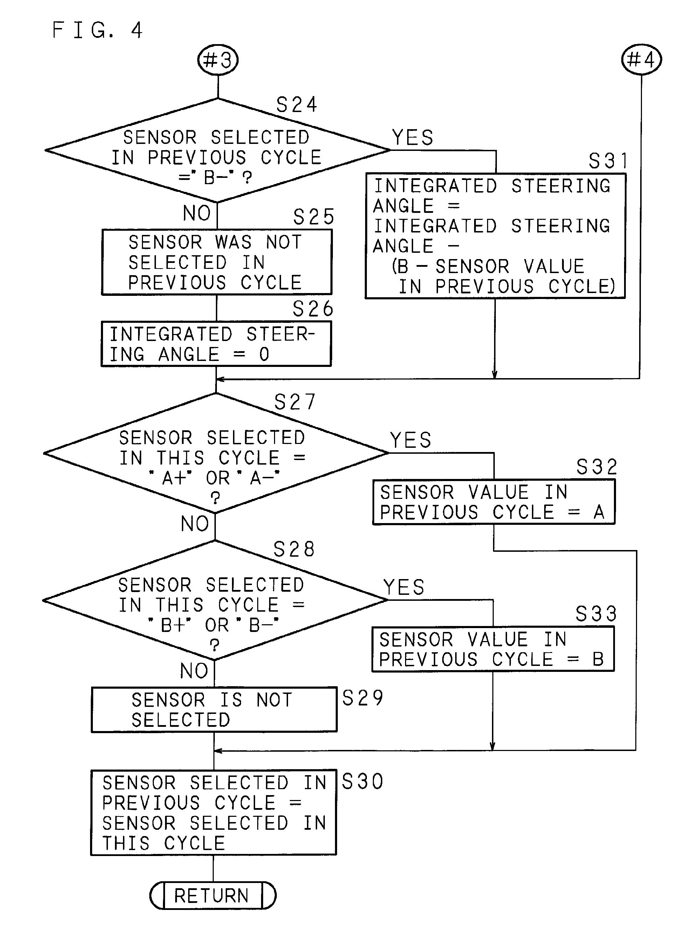

The following description will explain the operations of these rotational angle detecting device and torque detecting device in detecting the rotational angle (calculating the steering angle), with reference to the flow charts of FIG. 2A, FIG. 2B, FIG. 3A, FIG. 3B and FIG. 4 showing the operations. Here, the phase difference between the magnetic sensors 1A, 2A and the magnetic sensors 1B, 2B is an electrical angle of 90°.

The processing unit 4 of this rotational angle detecting device, first, judges whether or not the detection signal A of the magnetic sensor 1A is greater than the detection signal B of the magnetic sensor 1B in the previous cycle of sampling and whether or not the detection signal A is not greater than the detection signal B in this cycle of sampling (S1).

Judging from the sampling cycle and the steering speed (the displacement speed of the steering angle), this is the step for detecting a change of each of the detection signals A, B from the region "d" to region "e" or from the region "a" to region "h" in FIG. 5.

Here, in FIG. 5, the direction of rightward rotation of the steering wheel 1 is the positive direction, and the range from a predetermined lower bound threshold to upper bound threshold is set as a standard range in which each of the detection signal A, B is in the vicinity of an non-extreme value (the detection signal for the vicinity of each connecting point between the first inclining portion 15a and the second inclining portion 15b is in the vicinity of an extreme value).

If the detection signal A is greater than the detection signal B in the previous cycle of sampling and the detection signal A is not greater than the detection signal B in this cycle of sampling (in FIG. 5, the detection signals A, B are in the region "e" or region "h") (S1), the processing unit 4 judges whether or not the detection signal A or the detection signal B in this cycle of sampling is greater than the middle value (midpoint) between the values to be taken by the detection signals A, B as shown in FIG. 5 (S5).

Accordingly, the processing unit 4 judges which of the region "e" and region "h" the detection signals A, B are present in FIG. 5.

If the detection signal A or the detection signal B in this cycle of sampling is greater than the midpoint (in FIG. 5, each of the detection signals A, B is in the region "e" and the detection signal A is not greater than the upper bound threshold) (S5), the processing unit 4 judges that the selected sensor in this cycle of sampling is the magnetic sensor 1A and is outputting a rightward-falling (decreasing) portion of the detection signal A as shown in FIG. 5, "A-" (S6).

If the detection signal A or the detection signal B in this cycle of sampling is not greater than the midpoint (in FIG. 5, the detection signals A, B are in the region "h" and the detection signal B is not less than the lower bound threshold) (S5), the processing unit 4 judges that the selected sensor in this cycle of sampling is the magnetic sensor 1B and is outputting a rightward-falling (decreasing) portion of the detection signal B as shown in FIG. 5, "B-" (S11).

If the detection signal A is not greater than the detection signal B in the previous cycle of sampling, or if the detection signal A is not equal to or less than the detection signal B in this cycle of sampling (S1) the processing unit 4 judges whether or not the detection signal A is less than the detection signal B in the previous cycle of sampling and the detection signal A is equal to or greater than the detection signal B in this cycle of sampling (S2).

Judging from the sampling cycle and the steering speed (the displacement speed of the steering angle), this is the step for detecting a change of each of the detection signals A, B from the region "e" to the region "d" or from the region "h" to the region "a" in FIG. 5.

If the detection signal A is less than the detection signal B in the previous cycle of sampling and the detection signal A is not less than the detection signal B in this cycle of sampling (indicating that the detection signals A, B are in the region "d" or region "a" in FIG. 5) (S2), the processing unit 4 judges whether or not the detection signal A or the detection signal B in this cycle of sampling is greater than the midpoint (S7).

Accordingly, the processing unit 4 judges which of the region "d" and region "a" the detection signals A, B are present in FIG. 5.

If the detection signal A or the detection signal B in this cycle of sampling is greater than the midpoint (indicating that each of the detection signals A, B is in the region "d" and the detection signal B is not greater than the upper bound threshold in FIG. 5) (S7), the processing unit 4 judges that the selected sensor in this cycle of sampling is the magnetic sensor 1B and is outputting a rightward-rising (increasing) portion of the detection signal B as shown in FIG. 5, "B+" (S8).

If the detection signal A or the detection signal B in this cycle of sampling is not greater than the midpoint (indicating that the detection signals A, B are in the region "a" and the detection signal A is not less than the lower bound threshold in FIG. 5) (S7), the processing unit 4 judges that the selected sensor in this cycle of sampling is the magnetic sensor 1A and is outputting a rightward-rising (increasing) portion of the detection signal A as shown in FIG. 5, "A+" (S12).

If the detection signal A is not less than the detection signal B in the previous cycle of sampling, or if the detection signal A is not equal to or not greater than the detection signal B in this cycle of sampling (S2), the processing unit 4 judges whether or not the detection signal A in this cycle of sampling is greater than the upper bound threshold and the detection signal B in this cycle of sampling is greater than the lower bound threshold (S3).

This is the step for judging whether or not the detection signals A, B are in the region "c" in FIG. 5.

If the detection signal A in this cycle of sampling is greater than the upper bound threshold and the detection signal B in this cycle of sampling is greater than the lower bound threshold (indicating that the detection signals A, B are in the region "c" and the detection signal B is not less than the lower bound threshold in FIG. 5) (S3), the processing unit 4 judges that the selected sensor in this cycle of sampling is the magnetic sensor 1B and is outputting a rightward-rising (increasing) portion of the detection signal B as shown in FIG. 5, "B+" (S9).

If the detection signal A in this cycle of sampling is not greater than the upper bound threshold or the detection signal B in this cycle of sampling is not greater than the lower bound threshold (S3), the processing unit 4 judges whether or not the detection signal B in this cycle of sampling is greater than the upper bound threshold and the detection signal A in this cycle of sampling is greater than the lower bound threshold (S4).

This is the step for judging whether or not the detection signals A, B are in the region "f" in FIG. 5

If the detection signal B in this cycle of sampling is greater than the upper bound threshold and the detection signal A in this cycle of sampling is greater than the lower bound threshold (indicating that the detection signals A, B are in the region "f" and the detection signal A is not less than the lower bound threshold in FIG. 5) (S4), the processing unit 4 judges that the selected sensor in this cycle of sampling is the magnetic sensor 1A and is outputting a rightward-falling (decreasing) portion of the detection signal A as shown in FIG. 5, "A-" (S10).

If the detection signal B in this cycle of sampling is not greater than the upper bound threshold or the detection signal A in this cycle of sampling is not greater than the lower bound threshold (S4), the processing unit 4 judges whether or not detection signal A in this cycle of sampling is less than the lower bound threshold and the detection signal B in this cycle of sampling is less than the upper bound threshold (S13).

This is the step for judging whether or not the detection signals A, B are in the region "g" in FIG. 5

If the detection signal A in this cycle of sampling is less than the lower bound threshold and the detection signal B in this cycle of sampling is less than the upper bound threshold (indicating that the detection signals A, B are in the region "g" and the detection signal B is not greater than the upper bound threshold in FIG. 5) (S13), the processing unit 4 judges that the selected sensor in this cycle of sampling is the magnetic sensor 1B and is outputting a rightward-falling (decreasing) portion of the detection signal B as shown in FIG. 5, "B-" (S19).

If the detection signal A in this cycle of sampling is not less than the lower bound threshold or the detection signal B in this cycle of sampling is not less than the upper bound threshold (S13), the processing unit 4 judges whether or not detection signal B in this cycle of sampling is less than the lower bound threshold and the detection signal A in this cycle of sampling is less than the upper bound threshold (S14).

This is the step for judging whether or not the detection signals A, B are in the region "b" in FIG. 5.

If the detection signal B in this cycle of sampling is less than the lower bound threshold and the detection signal A in this cycle of sampling is less than the upper bound threshold (indicating that the detection signals A, B are in the region "b" and the detection signal A is not greater than the upper bound threshold in FIG. 5) (S14), the processing unit 4 judges that the selected sensor in this cycle of sampling is the magnetic sensor 1A and is outputting a rightward-rising (increasing) portion of the detection signal A as shown in FIG. 5, "A+" (S20).

If the detection signal B in this cycle of sampling is not less than the lower bound threshold and the detection signal A in this cycle of sampling is not less than the upper bound threshold (S14), the processing unit 4 judges that the selected sensor in the previous cycle of sampling is the selected sensor in this cycle of sampling (S15).

Next, the processing unit 4 judges whether or not the selected sensor in the previous cycle of sampling was the magnetic sensor 1A and was outputting a rightward-rising (increasing) portion "A+" (S16). If the selected sensor in the previous cycle of sampling was 1A and was outputting the rightward-rising (increasing) portion "A+", the processing unit 4 adds the change of the detection signal indicating the displacement angle from the previous cycle of sampling to this cycle of sampling (A - the sensor value in the previous cycle) to the integrated steering angle up to the previous cycle of sampling and outputs the result as the rotational angle (S21).

In this case, since the magnetic sensor 1A was outputting the rightward-rising (increasing) detection signal "A+" in the previous cycle of sampling and the detection signal value A was within a range from the lower bound threshold to the upper bound threshold, the detection signal value A of the magnetic sensor 1A will not come into a region near an extreme value until this cycle of sampling. Accordingly, since the increase/decrease of the detection signal value corresponds to the increase/decrease of the integrated steering angle, the change of the detection signal is added to the integrated steering angle, and the change of the detection signal can be calculated from the detection signal A in this cycle of sampling.

If the selected sensor in the previous cycle of sampling was not the magnetic sensor 1A and was not outputting the rightward-rising (increasing) portion "A+" (S16), the processing unit 4 judges whether or not the selected sensor in the previous cycle of sampling was the magnetic sensor 1A and was outputting the rightward-falling (decreasing) portion "A-" (S17).

If the selected sensor in the previous cycle of sampling was the magnetic sensor 1A and was outputting the rightward-falling (decreasing) portion "A-" (S17), the processing unit 4 subtracts the change of the detection signal indicating the displacement angle from the previous cycle of sampling to this cycle of sampling (A - the sensor value in the previous cycle) from the integrated steering angle up to the previous cycle of sampling and outputs the result as the rotational angle (S22).

In this case, since the magnetic sensor 1A was outputting the rightward-falling (decreasing) detection signal "A-" in the previous cycle of sampling and the detection signal value A was within the range from the lower bound threshold to the upper bound threshold, the detection signal value A of the magnetic sensor 1A will not come into a region near an extreme value until this cycle of sampling. Accordingly, since the increase/decrease of the detection signal value corresponds to the decrease/increase of the integrated steering angle, the change of the detection signal is subtracted from the integrated steering angle, and the change of the detection signal can be calculated from the detection signal A of this cycle of sampling.

If the selected sensor in the previous cycle of sampling was not the magnetic sensor 1A and was not outputting the rightward-falling (decreasing) portion "A-" (S17), the processing unit 4 judges whether or not the selected sensor in the previous cycle of sampling was the magnetic sensor 1B and was outputting a rightward-rising (increasing) portion "B+" (S18).

If the selected sensor in the previous cycle of sampling was the magnetic sensor 1B and was outputting the rightward-rising (increasing) portion "B+" (S18), the processing unit 4 adds the change of the detection signal indicating the displacement angle from the previous cycle of sampling to this cycle of sampling (B - the sensor value in the previous cycle) to the integrated steering angle up to the previous cycle of sampling and outputs the result as the rotational angle (S23).

In this case, since the magnetic sensor 1B was outputting the rightward-rising (increasing) detection signal "B+" in the previous cycle of sampling and the detection signal value B was within the range from the lower bound threshold to the upper bound threshold, the detection signal value B of the magnetic sensor 1B will not come into a region near an extreme value until this cycle of sampling. Accordingly, since the increase/decrease of the detection signal value corresponds to the increase/decrease of the integrated steering angle, the change of the detection signal is added to the integrated steering angle, and the change of the detection signal can be calculated from the detection signal B of this cycle of sampling.

If the selected sensor in the previous cycle of sampling was not the magnetic sensor 1B and was not outputting the rightward-rising (increasing) portion "B+" (S18), the processing unit 4 judges whether or not the selected sensor in the previous cycle of sampling was the magnetic sensor 1B and was outputting a rightward-falling (decreasing) portion "B-" (S24).

If the selected sensor in the previous cycle of sampling was the magnetic sensor 1B and was outputting a rightward-falling (decreasing) portion "B-" (S24), the processing unit 4 subtracts the change of the detection signal indicating the displacement angle from the previous cycle of sampling to this cycle of sampling (B - the sensor value in the previous cycle) from the integrated steering angle up to the previous cycle of sampling and outputs the result as the rotational angle (S31).

In this case, since the magnetic sensor 1B was outputting the rightward-falling (decreasing) detection signal "B-" in the previous cycle of sampling and the detection signal value B was within the range from the lower bound threshold to the upper bound threshold, the detection signal value B of the magnetic sensor 1B will not come into a region near an extreme vale until this cycle of sampling. Accordingly, since the increase/decrease of the detection signal value corresponds to the decrease/increase of the integrated steering angle, the change of the detection signal is subtracted from the integrated steering angle, and the change of the detection signal can be calculated from the detection signal B of this cycle of sampling.

If the selected sensor in the previous cycle of sampling was not the magnetic sensor 1B and was not outputting the rightward-falling (decreasing) portion "B-" (S24), the processing unit 4 judges that a magnetic sensor was not selected in the previous cycle of sampling (S25), i.e., it was steering start time and thus the steering angle was zero, and outputs this value as the rotational angle (S26).

Next, if the selected sensor in this cycle of sampling is the magnetic sensor 1A and is outputting the rightward-rising (increasing) detection signal "A+", or is the magnetic sensor 1A and is outputting the rightward-falling (decreasing) detection signal "A-" (S27), the processing unit 4 selects the detection signal A in this cycle of sampling as the "sensor value in the previous cycle" for use in the operations (S21, S22, S23 and S31) (S32), replaces the "sensor selected in the previous cycle" with the "sensor selected in this cycle" (S30) and returns process.

If the selected sensor in this cycle of sampling is not the magnetic sensor 1A (S27), the processing unit 4 judges whether or not the selected sensor in this cycle of sampling is the magnetic sensor 1B and is outputting the rightward-rising (increasing) detection signal "B+", or is the magnetic sensor 1B and is outputting the rightward-falling (decreasing) detection signal "B-" (S28).

If the selected sensor in this cycle of sampling is the magnetic sensor 1B (S28), the processing unit 4 selects the detection signal value B in this cycle of sampling as the "sensor value in the previous cycle" for use in the operations (S21, S22, S23 and S31) (S33), and replaces the "sensor selected in the previous cycle" with the "sensor selected in this cycle" (S30) and returns process.

If the selected sensor in this cycle of sampling is not the magnetic sensor 1B (S28), the processing unit 4 judges that a sensor is not selected (S29), and selects "sensor is not selected" for the "sensor selected in the previous cycle" (S30) and returns process.

Note that while the steering angle calculating operation has been explained with respect to the magnetic sensors 1A, 1B, it is also possible to perform the same operation with respect to the magnetic sensors 2A. 2B.

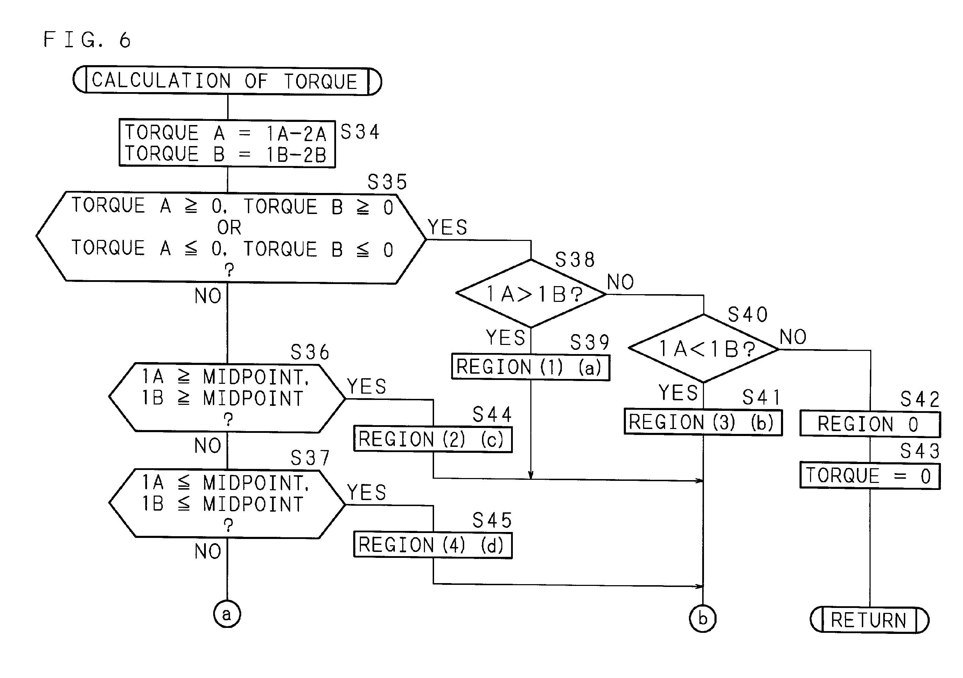

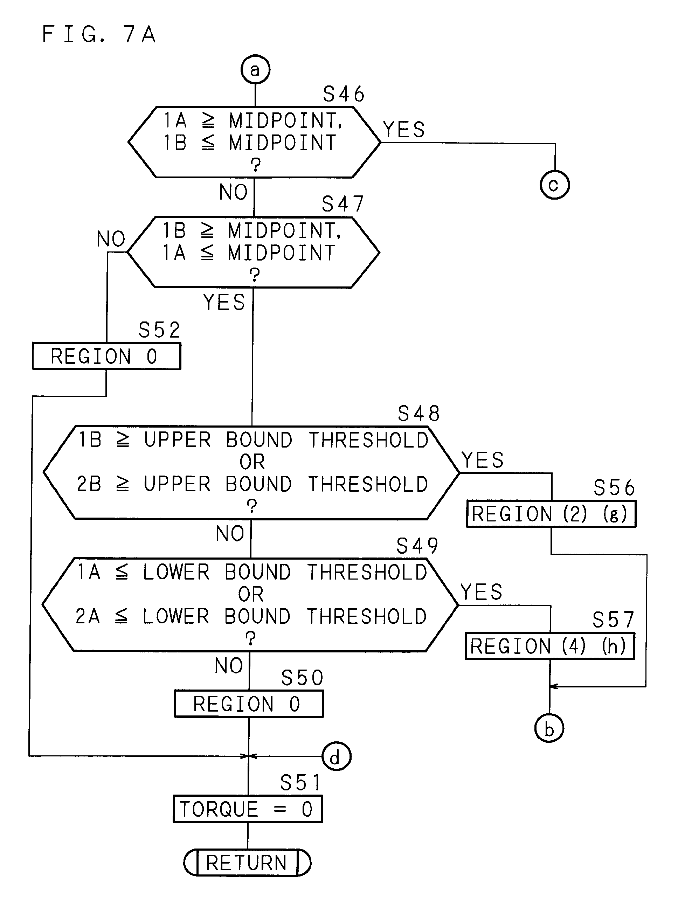

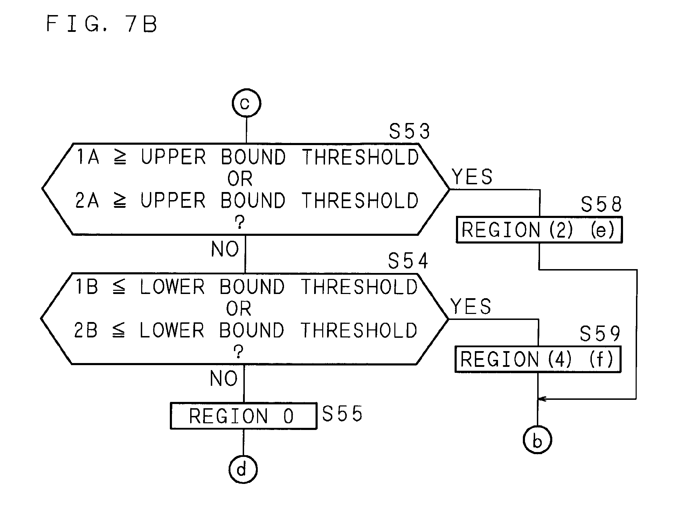

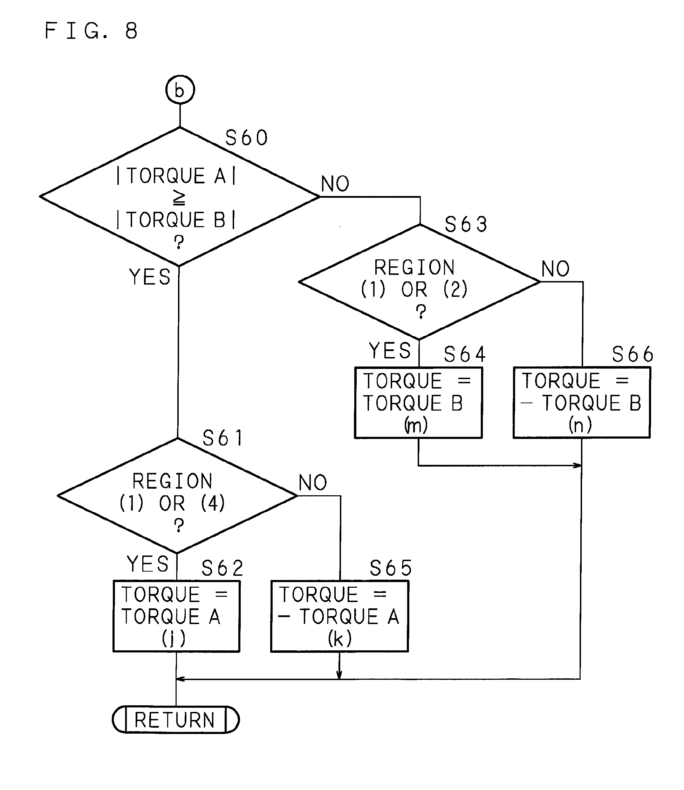

The following description will explain the operation of this torque detecting device in detecting the torque (calculating the torque), with reference to the flow charts shown in FIG. 6, FIG. 7A, FIG. 7B and FIG. 8.

Here, the phase difference between the magnetic sensors 1A, 2A and the magnetic sensors 1B, 2B is an electrical angle of 90°.

The processing unit 4 of this torque detecting device, first, calculates "torque A" = 1A - 2A and "torque B" = 1B - 2B from the detection signals (indicated as 1A, 1B, 2A, 2B) of the magnetic sensors 1A, 1B, 2A, 2B (S34).

Next, the processing unit 4 judges whether or not the torque A ≥ 0 and the torque B ≥ 0, or the torque A ≤ 0 and the torque B ≤ 0 are satisfied (S35).

If the torque A ≥ 0 and the torque B ≥ 0, or the torque A ≤ 0 and the torque B ≤ 0 are satisfied (S35), the processing unit 4 judges whether or not the detection signals 1A, 1B of the magnetic sensors 1A, 1B satisfy 1A > 1B (S38).

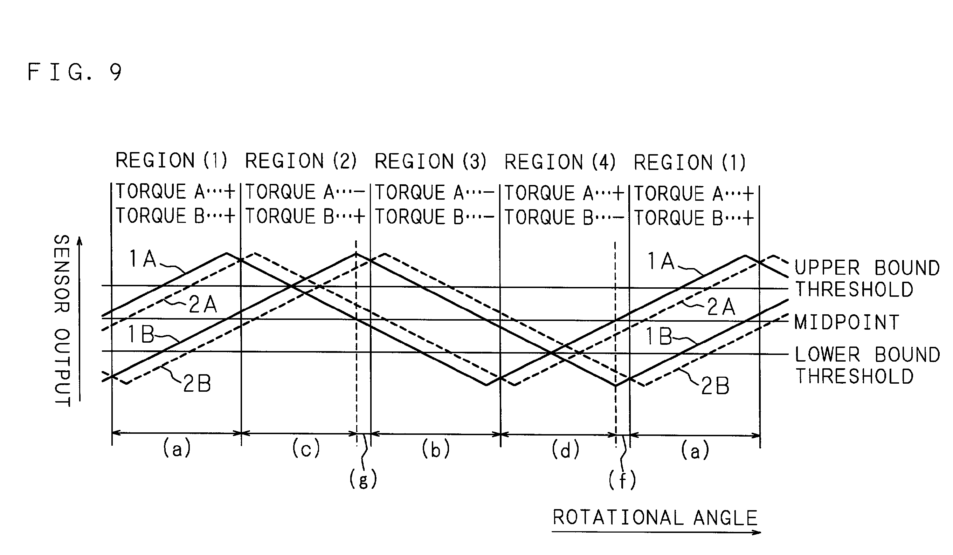

If the detection signals 1A, 1B satisfy 1A> 1B (S38), the processing unit 4 judges that the detection signals 1A, 1B, 2A, 2B are present in a region (1) (a) in the waveform chart of the detection signals shown in FIG. 9 (S39).

If the detection signals 1A, 1B do not satisfy 1A > 1B (S38), the processing unit 4 judges whether or not the detection signals 1A, 1B satisfy 1A < 1B (S40).

If the detection signals 1A, 1B satisfy 1A < 1B (S40), the processing unit 4 judges that the detection signals 1A, 1B, 2A, 2B are present in a region (3) (b) in the waveform chart of the detection signals shown in FIG. 9 (S41).

If the detection signals 1A, 1B do not satisfy 1A < 1B (S40), the processing unit 4 judges that there is no region where the detection signals 1A, 1B, 2A, 2B are present in the waveform chart of the detection signals shown in FIG. 9 (S42), and judges that the detected torque is zero (S43) and returns process.

If the torque A ≥ 0 and the torque B ≥ 0 are not satisfied and the torque A ≤ 0 and the torque B ≤ 0 are not satisfied (S35), the processing unit 4 compares the detection signals 1A, 1B with the middle value (midpoint) of values that can be taken by the detection signals 1A, 1B as shown in FIG. 9 and judges whether or not 1A ≥ "the midpoint" and 1B ≥ "the midpoint" are satisfied (S36).

If the detection signals 1A, 1B satisfy 1A ≥ "the midpoint" and 1B ≥ "the midpoint" (S36), the processing unit 4 judges that the detection signals 1A, 1B, 2A, 2B are present in a region (2) (c) in the waveform chart of the detection signals shown in FIG. 9 (S44).

If the detection signals 1A, 1B dot not satisfy 1A ≥ "the midpoint" nor 1B ≥ "the midpoint" (S36), the processing unit 4 compares the detection signals 1A, 1B with the midpoint and judges whether or not 1A ≤ "the midpoint" and 1B ≤ "the midpoint" are satisfied (S37).

If the detection signals 1A, 1B satisfy 1A ≤ "the midpoint" and 1B ≤ "the midpoint" (S37), the processing unit 4 judges that the detection signals 1A, 1B, 2A, 2B are present in a region (4) (d) in the waveform chart of the detection signals shown in FIG. 9 (S45).

If the detection signals 1A, 1B do not satisfy 1A ≤ "the midpoint" nor 1B ≤ "the midpoint" (S37), the processing unit 4 compares the detection signals 1A, 1B with the midpoint and judges whether or not 1A ≥ "the midpoint" and 1B ≤ "the midpoint" are satisfied (S46).

If the detection signals 1A, 1B satisfy 1A ≥ "the midpoint" and 1B ≤ "the midpoint" (S46), the processing unit 4 compares the detection signals 1A, 2A with the upper bound threshold as shown in FIG. 9 and judges whether or not they satisfy 1A ≥ "the upper bound threshold" or 2A ≥ "the upper bound threshold" (S53).

The range of the upper bound threshold and a later-described lower bound threshold is a standard range within which the detection signals 1A, 1B, 2A, 2B are present in the vicinity of an extreme value (the detection signal for each of the connecting points between the first inclining portions 15a and the second inclining portions 15b is in the vicinity of an extreme value), and is defined by substantially the middle values between each of the maximum and minimum values that can be taken by the detection signals 1A, 1B, 2A, 2B and the midpoint.

If the detection signals 1A, 2A satisfy 1A ≥ "the upper bound threshold" or 2A ≥ "the upper bound threshold" (S53), the processing unit 4 judges that detection signals 1A, 1B, 2A, 2B are present in a region (2) (e) in the waveform chart of the detection signals shown in FIG. 9 (S58). In this case, the region (2)(e) is not present in FIG. 9, but it appears when the steering wheel 1 is turned in the opposite direction.

If the detection signals 1A, 2A do not satisfy 1A ≥ "the upper bound threshold" nor 2A ≥ "the upper bound threshold" (S53), the processing unit 4 compares the detection signals 1B, 2B with the lower bound threshold as shown in FIG. 9 and judges whether or not the detection signals 1B, 2B satisfy 1B ≤ "the lower bound threshold" or 2B ≤ "the lower bound threshold" (S54).

If the detection signals 1B, 2B satisfy 1B ≤ "the lower bound threshold" or 2B ≤ "the lower bound threshold" (S54), the processing unit 4 judges that detection signals 1A, 1B, 2A, 2B are present in a region (4) (f) in the waveform chart of the detection signals shown in FIG. 9 (S59).

If the detection signals 1B, 2B do not satisfy 1B ≤ "the lower bound threshold" nor 2B ≤ "the lower bound threshold" (S54), the processing unit 4 judges that there is no region where the detection signals 1A, 1B, 2A, 2B are present in the waveform chart of the detection signals shown in FIG. 9 (S55), and judges that the detected torque is zero (S51) and returns process.

If the detection signals 1A, 1B dot not satisfy 1A ≥ "the midpoint" and 1B ≤ "the midpoint" (S46), the processing unit 4 compares the detection signals 1A, 1B with the midpoint and judges whether or not 1B ≥ "the midpoint" and 1A ≤ "the midpoint" are satisfied (S47).

If the detection signals 1A, 1B do not satisfy 1B ≥ "the midpoint" nor 1A ≤ "the midpoint" (S47), the processing unit 4 judges that there is no region where the detection signals 1A, 1B, 2A, 2B are present in the waveform chart of the detection signals shown in FIG. 9 (S52), and judges that the detected torque is zero (S51) and returns process.

If the detection signals 1A, 1B satisfy 1B ≥ the midpoint and 1A ≤ "the midpoint" (S47), the processing unit 4 compares the detection signals 1B, 2B with the upper bound threshold as shown in FIG. 9 and judges whether or not the detection signals 1B, 2B satisfy 1B ≥ "the upper bound threshold" or 2B ≥ "the upper bound threshold" (S48).

If the detection signals 1B, 2B satisfy 1B ≥ "the upper bound threshold" or 2B ≥ "the upper bound threshold" (S48), the processing unit 4 judges that the detection signals 1A, 1B, 2A, 2B are present in a region (2) (g) in the waveform chart of the detection signals shown in FIG. 9 (S56).

If the detection signals 1B, 2B do not satisfy 1B ≥ "the upper bound threshold" nor 2B ≥ "the upper bound threshold" (S48), the processing unit 4 compares the detection signals 1A, 2A with the lower bound threshold as shown in FIG. 9 and judges whether or not the detection signals 1A, 2A satisfy 1A ≤ "the lower bound threshold" or 2A ≤ "the lower bound threshold" (S49).

If the detection signals 1A, 2A satisfy 1A ≤ "the lower bound threshold" or 2A ≤ "the lower bound threshold" (S49), the processing unit 4 judges that the detection signals 1A, 1B, 2A, 2B are present in a region (4) (h) in the waveform chart of the detection signals shown in FIG. 9 (S57). In this case, the region (4)(h) is not present in FIG. 9, but it appears when the steering wheel is turned in the opposite direction.

If the detection signals 1A, 2A do not satisfy 1A ≤ "the lower bound threshold" nor 2A ≤ "the lower bound threshold" (S49), the processing unit 4 judges that there is no region where the detection signals 1A, 1B, 2A, 2B are present in the waveform chart of the detection signals shown in FIG. 9 (S50), and judges that the detected torque is zero (S51) and returns process.

Next, the processing unit 4 compares the magnitudes of the absolute values |torque A|, |torque B | of "torque A" = 1A - 2A, "torque B" = 1B - 2B calculated in S34 (S60).

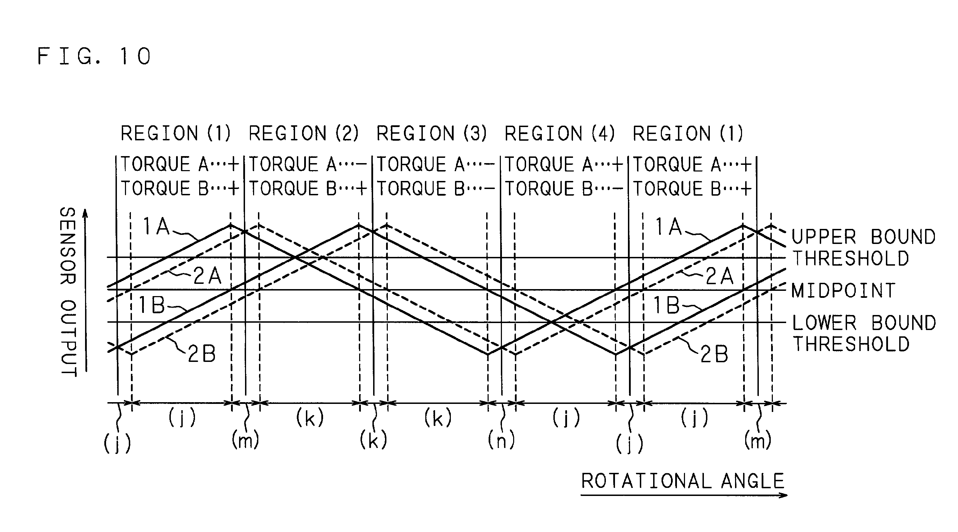

If |torque A| ≥ |torque B | is satisfied (S60) and the region given in the preceding steps as the region where the detection signals 1A, 1B, 2A, 2B are present is the region (1) ((1)(a)) or region (4) ((4)(d), (4)(f)) (S61), the processing unit 4 judges that a region where the detection signals 1A, 1B, 2A, 2B are truly present is a region (j) in the waveform chart of the detection signals shown in FIG. 10 and that the detected torque is the "torque A" (S62) and returns process.

If |torque A | ≥ |torque B | is satisfied (S60) and the region given in the preceding steps as the region where the detection signals 1A, 1B, 2A, 2B are present is neither the region (1) nor region (4) (S61), the processing unit 4 judges that a region where the detection signals 1A, 1B, 2A, 2B are truly present is a region (k) in the waveform chart of the detection signals shown in FIG. 10 and that the detected torque is the "-torque A" (S65) and returns process.

If |torque A | ≥ |torque B | is not satisfied (S60) and the region given in the preceding steps as the region where the detection signals 1A, 1B, 2A, 2B are present is the region (1) ((1)(a)) or region (2) ((2)(c), (2)(g)) (S63), the processing unit 4 judges that a region where the detection signals 1A, 1B, 2A, 2B are truly present is a region (m) in the waveform chart of the detection signals shown in FIG. 10 and that the detected torque is the "torque B" (S64) and returns process.

If |torque A | ≥ |torque B | is not satisfied (S60) and the region given in the preceding steps as the region where the detection signals 1A, 1B, 2A, 2B are present is neither the region (1) nor region (2) (S63), the processing unit 4 judges that a region where the detection signals 1A, 1B, 2A, 2B are truly present is a region (n) in the waveform chart of the detection signals shown in FIG. 10 and that the detected torque is the "-torque B" (S66) and returns process.

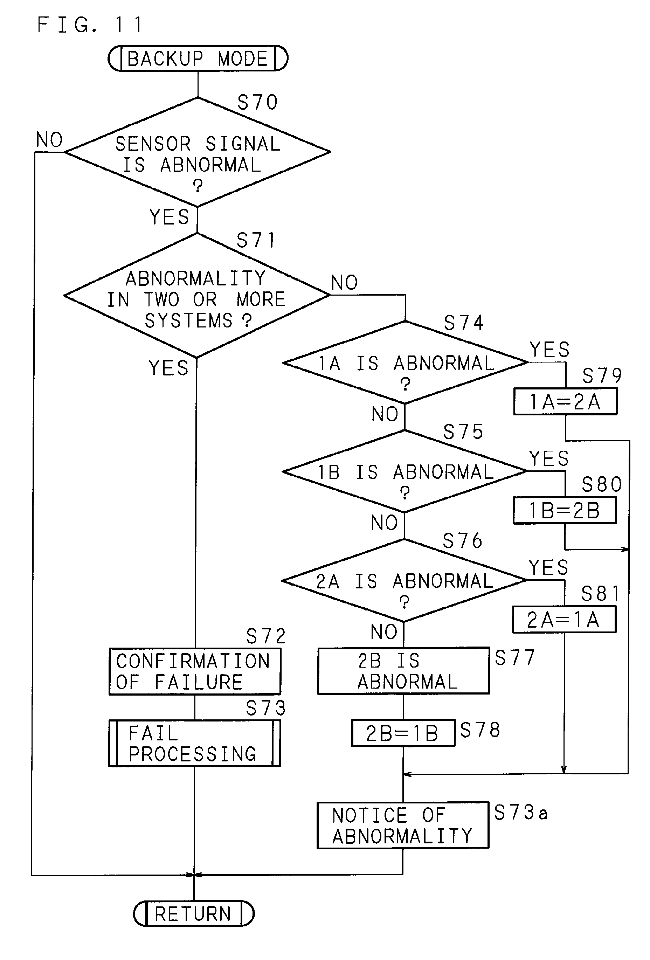

Next, the following description will explain the operation of this torque detecting device for backup, with reference to the flow chart of FIG. 11 showing the operation.

The processing unit 4 of this torque detecting device found abnormality in the detection signals (indicated as 1A, 1B, 2A, 2B) of the magnetic sensors 1A, 1B, 2A, 2B (S70). If the abnormal detection signals were found in two or more systems (S71), the processing unit 4 judges that the torque detecting device has failure (S72), and performs the fail processing of separating the steering assist motor from the steering mechanism and notifying the driver of the occurrence of failure by means of an alarm lamp or the like (S73) and returns process.

When the processing unit 4 found abnormality in the detection signals 1A, 1B, 2A, 2B (S70), and if the abnormal detection signal was found in one system (S71) and if the abnormal detection signal is the detection signal 1A (S74), the processing unit 4 replaces the detection signal 1A with the detection signal 2A (S79), and notifies the driver of the abnormality by means of an alarm lamp or the like (S73a) and returns process. In other words, the processing unit 4 judges that the detected torque by a pair of the magnetic sensors 1A, 2A including the magnetic sensor 1A having abnormality is zero, and uses the detected torque by a pair of the magnetic sensors 1B, 2B.

If the abnormal detection signal was found in one system (S71) and if the abnormal detection signal is not the detection signal 1A (S74) but is the detection signal 1B (S75), the processing unit 4 replaces the detection signal 1B with the detection signal 2B (S80), and notifies the driver of the abnormality by means of an alarm lamp or the like (S73a) and returns process. In other words, the processing unit 4 judges that the detected torque by a pair of the magnetic sensors 1B, 2B including the magnetic sensor 1B having abnormality is zero, and uses the detected torque by a pair of the magnetic sensors 1A, 2A.

If the abnormal detection signal was found in one system (S71) and if the abnormal detection signal is not the detection signal 1A nor the detection signal 1B (S74, S75) but is the detection signal 2A (S76), the processing unit 4 replaces the detection signal 2A with the detection signal 1A (S81), and notifies the driver of the abnormality by means of an alarm lamp or the like (S73a) and returns process. In other words, the processing unit 4 judges that the detected torque by a pair of the magnetic sensors 1A, 2A including the magnetic sensor 2A having abnormality is zero, and uses the detected torque by a pair of the magnetic sensors 1B, 2B.

If the abnormal detection signal was found in one system (S71) and if that abnormal detection signal is not the detection signal 1A, detection signal 1B nor detection signal 2A (S74, S75, S76) but is the detection signal 2B (S77), the processing unit 4 replaces the detection signal 2B with the detection signal 1B (S78), and notifies the driver of the abnormality by means of an alarm lamp or the like (S73a) and returns process. In other words, the processing unit 4 judges that the detected torque by a pair of the magnetic sensors 1B, 2B including the magnetic sensor 2B having abnormality is zero, and uses the detected torque by a pair of the magnetic sensors 1A, 2A.

The following description will explain the operation of this torque detecting device in detecting the torque (calculating the torque) when the phase difference between the magnetic sensors 1A, 2A and the magnetic sensors 1B, 2B is an electrical angle of 120°, with reference to the flow charts of FIG. 6, FIG. 7A, FIG. 7B and FIG. 8 showing the operation.

The processing unit 4 of this torque detecting device, first, calculates "torque A" = 1A - 2A and "torque B" = 1B - 2B from the detection signals (indicated as 1A, 1B, 2A, 2B) of the magnetic sensors 1A, 1B, 2A, 2B (S34).

Next, the processing unit 4 judges whether or not the torque A ≥ 0 and the torque B ≥ 0, or the torque A ≤ 0 and the torque B ≤ 0 are satisfied (S35).

If the torque A ≥ 0 and the torque B ≥ 0, or the torque A ≤ 0 and the torque B ≤ 0 are satisfied (S35), the processing unit 4 judges whether or not the detection signals 1A, 1B of the magnetic sensors 1A, 1B satisfy 1A > 1B (S38).

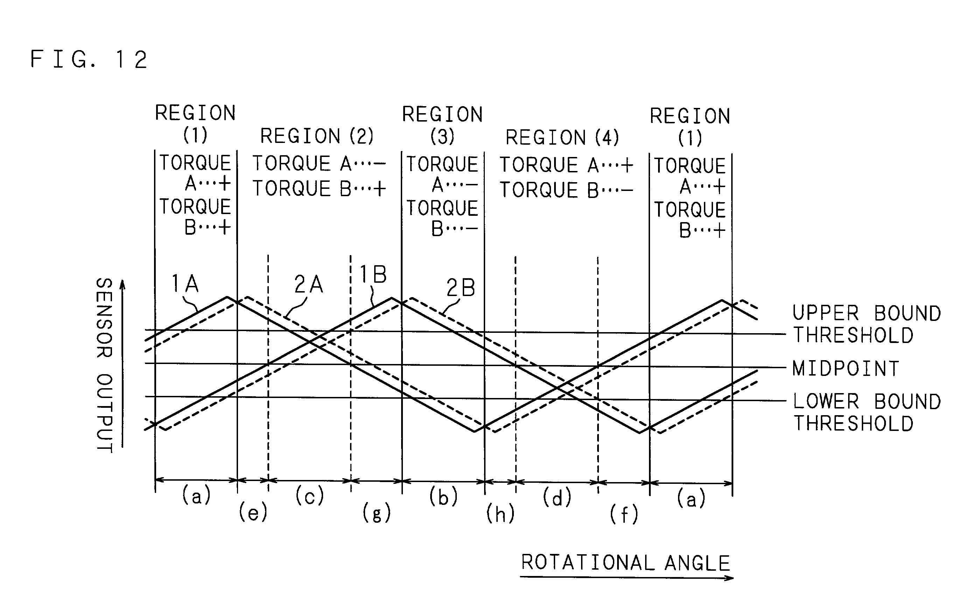

If the detection signals 1A, 1B satisfy 1A > 1B (S38), the processing unit 4 judges that the detection signals 1A, 1B, 2A, 2B are present in a region (1) (a) in the waveform chart of the detection signals shown in FIG. 12 (S39).

If the detection signals 1A, 1B do not satisfy 1A> 1B (S38), the processing unit 4 judges whether the detection signals 1A, 1B satisfy 1A < 1B (S40).

If the detection signals 1A, 1B satisfy 1A < 1B (S40), the processing unit 4 judges that the detection signals 1A, 1B, 2A, 2B are present in a region (3) (b) in the waveform chart of the detection signals shown in FIG. 12 (S41).

If the detection signals 1A, 1B do not satisfy 1A < 1B (S40), the processing unit 4 judges that there is no region where the detection signals 1A, 1B, 2A, 2B are present in the waveform chart of the detection signals shown in FIG. 12 (S42), and judges that the detected torque is zero (S43) and returns process.

If the torque A ≥ 0 and the torque B ≥ 0 are not satisfied and the torque A ≤ 0 and the torque B ≤ 0 are not satisfied (S35), the processing unit 4 compares the detection signals 1A, 1B with the middle value (midpoint) between values that can be taken by the detection signals 1A, 1B as shown in FIG. 12 and judges whether or not 1A ≥ "the midpoint" and 1B ≥ "the midpoint" are satisfied (S36).

If the detection signals 1A, 1B satisfy 1A ≥ "the midpoint" and 1B ≥ "the midpoint" (S36), the processing unit 4 judges that the detection signals 1A, 1B, 2A, 2B are present in a region (2) (c) in the waveform chart of the detection signals shown in FIG. 12 (S44).

If the detection signals 1A, 1B dot not satisfy 1A ≥ "the midpoint" and 1B ≥ "the midpoint" (S36), the processing unit 4 compares the detection signals 1A, 1B with the midpoint and judges whether or not 1A ≤ "the midpoint" and 1B ≤ "the midpoint" are satisfied (S37).

If the detection signals 1A, 1B satisfy 1A ≤ "the midpoint" and 1B ≤ "the midpoint" (S37), the processing unit 4 judges that the detection signals 1A, 1B, 2A, 2B are present in a region (4) (d) in the waveform chart of the detection signals shown in FIG. 12 (S45).

If the detection signals 1A, 1B do not satisfy 1A ≤ "the midpoint" nor 1B ≤ "the midpoint" (S37), the processing unit 4 compares the detection signals 1A, 1B with the midpoint and judges whether or not 1A ≥ "the midpoint" and 1B ≤ "the midpoint" are satisfied (S46).

If the detection signals 1A, 1B satisfy 1A ≥ "the midpoint" and 1B ≤ "the midpoint" (S46), the processing unit 4 compares the detection signals 1A, 1B with the upper bound threshold as shown in FIG. 12 and judges whether or not they satisfy 1A ≥ "the upper bound threshold" or 2A ≥ "the upper bound threshold" (S53).

The range of the upper bound threshold and a later-described lower bound threshold is a standard range within which the detection signals 1A, 1B, 2A, 2B are present in the vicinity of an extreme value (the detection signal for each of the connecting points between the first inclining portions 15a and the second inclining portions 15b is in the vicinity of an extreme value), and is defined by substantially the middle values between each of the maximum and minimum values that can be taken by the detection signals 1A, 1B, 2A, 2B and the midpoint.

If the detection signals 1A, 2A satisfy 1A ≥ "the upper bound threshold" or 2A ≥ "the upper bound threshold" (S53), the processing unit 4 judges that detection signals 1A, 1B, 2A, 2B are present in a region (2) (e) in the waveform chart of the detection signals shown in FIG. 12 (S58).

If the detection signals 1A, 2A do not satisfy 1A ≥ "the upper bound threshold" nor 2A ≥ "the upper bound threshold" (S53), the processing unit 4 compares the detection signals 1A, 2B with the lower bound threshold as shown in FIG. 12 and judges whether or not the detection signals 1A, 2B satisfy 1B ≤ "the lower bound threshold" or 2B ≤ "the lower bound threshold" (S54).

If the detection signals 1B, 2B satisfy 1B ≤ "the lower bound threshold" or 2B ≤ "the lower bound threshold" (S54), the processing unit 4 judges that detection signals 1A, 1B, 2A, 2B are present in a region (4) (f) in the waveform chart of the detection signals shown in FIG. 12 (S59).

If the detection signals 1B, 2B do not satisfy 1B ≤ "the lower bound threshold" nor 2B ≤ "the lower bound threshold" (S54), the processing unit 4 judges that there is no region where the detection signals 1A, 1B, 2A, 2B are present in the waveform chart of the detection signals shown in FIG. 12 (S55), and judges that the detected torque is zero (S51) and returns process.

If the detection signals 1A, 1B dot not satisfy 1A ≥ "the midpoint" nor 1B ≤ "the midpoint" (S46), the processing unit 4 compares the detection signals 1A, 1B with the midpoint and judges whether or not 1B ≥ "the midpoint" and 1A ≤ "the midpoint" are satisfied (S47).

If the detection signals 1A, 1B do not satisfy 1B ≥ "the midpoint" nor 1A ≤ "the midpoint" (S47), the processing unit 4 judges that there is no region where the detection signals 1A, 1B, 2A, 2B are present in the waveform chart of the detection signals shown in FIG. 12 (S52), and judges that the detected torque is zero (S51) and returns process.

If the detection signals 1A, 1B satisfy 1B ≥ "the midpoint" and 1A ≤ "the midpoint" (S47), the processing unit 4 compares the detection signals 1B, 2B with the upper bound threshold as shown in FIG. 12 and judges whether or not the detection signals 1B, 2B satisfy 1B ≥ "the upper bound threshold" or 2B ≥ "the upper bound threshold" (S48).

If the detection signals 1B, 2B satisfy 1B ≥ "the upper bound threshold" or 2B ≥ "the upper bound threshold" (S48), the processing unit 4 judges that the detection signals 1A, 1B, 2A, 2B are present in a region (2) (g) in the waveform chart of the detection signals shown in FIG. 12 (S56).

If the detection signals 1B, 2B do not satisfy 1B ≥ "the upper bound threshold" nor 2B ≥ "the upper bound threshold" (S48), the processing unit 4 compares the detection signals 1A, 2A with the lower bound threshold as shown in FIG. 12 and judges whether or not the detection signals 1A, 2A satisfy 1A ≤ "the lower bound threshold" or 2A ≤ "the lower bound threshold" (S49).

If the detection signals 1A, 2A satisfy 1A ≤ "the lower bound threshold" or 2A ≤ "the lower bound threshold" (S49), the processing unit 4 judges that the detection signals 1A, 1B, 2A, 2B are present in a region (4) (h) in the waveform chart of the detection signals shown in FIG. 12 (S57).

If the detection signals 1A, 2A do not satisfy 1A ≤ "the lower bound threshold" nor 2A ≤ "the lower bound threshold" (S49), the processing unit 4 judges that there is no region where the detection signals 1A, 1B, 2A, 2B are present in the waveform chart of the detection signals shown in FIG. 12 (S50), and judges that the detected torque is zero (S51) and returns process.

Next, the processing unit 4 compares the magnitudes of the absolute values |torque A |, | torque B | of "torque A" = 1A - 2A and "torque B" = 1B - 2B calculated in S34 (S60).

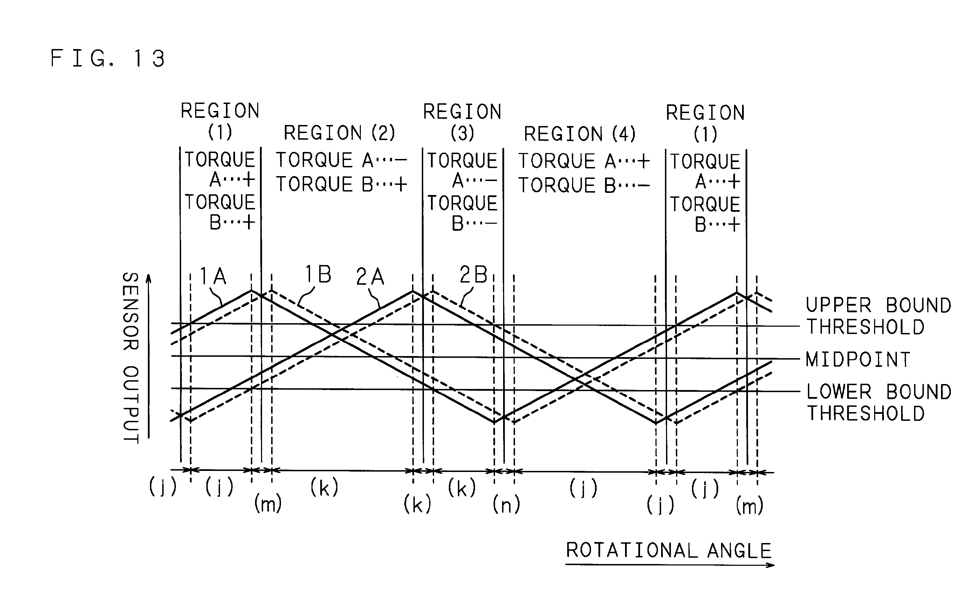

If |torque A | ≥ |torque B | is satisfied (S60) and the region given in the preceding steps as the region where the detection signals 1A, 1B, 2A, 2B are present is the region (1) ((1)(a)) or region (4) ((4)(d), (4)(f)) (S61), the processing unit 4 judges that a region where the detection signals 1A, 1B, 2A, 2B are truly present is a region (j) in the waveform chart of the detection signals shown in FIG. 13 and judges that the detected torque is the "torque A" (S62) and returns process.

If | torque A | ≥ torque B | is satisfied (S60) and the region given in the preceding steps as the region where the detection signals 1A, 1B, 2A, 2B are present is neither the region (1) nor region (4) (S61), the processing unit 4 judges that a region where the detection signals 1A, 1B, 2A, 2B are truly present is a region (k) in the waveform chart of the detection signals shown in FIG. 13 and judges that the detected torque is the "- torque A" (S65) and returns process.

If |torque A | ≥ |torque B | is not satisfied (S60) and the region given in the preceding steps as the region where the detection signals 1A, 1B, 2A, 2B are present is the region (1) ((1)(a)) or region (2) ((2)(c), (2)(g)) (S63), the processing unit 4 judges that a region where the detection signals 1A, 1B, 2A, 2B are truly present is a region (m) in the waveform chart of the detection signals shown in FIG. 13 and judges that the detected torque is the "torque B" (S64) and returns process.

If |torque A | ≥ |torque B | is not satisfied (S60) and the region given in the preceding steps as the region where the detection signals 1A, 1B, 2A, 2B are present is neither the region (1) nor region (2) (S63), the processing unit 4 judges that a region where the detection signals 1A, 1B, 2A, 2B are truly present is a region (n) in the waveform chart of the detection signals shown in FIG. 13 and judges that the detected torque is the "- torque B" (S66) and returns process.

### Embodiment 2

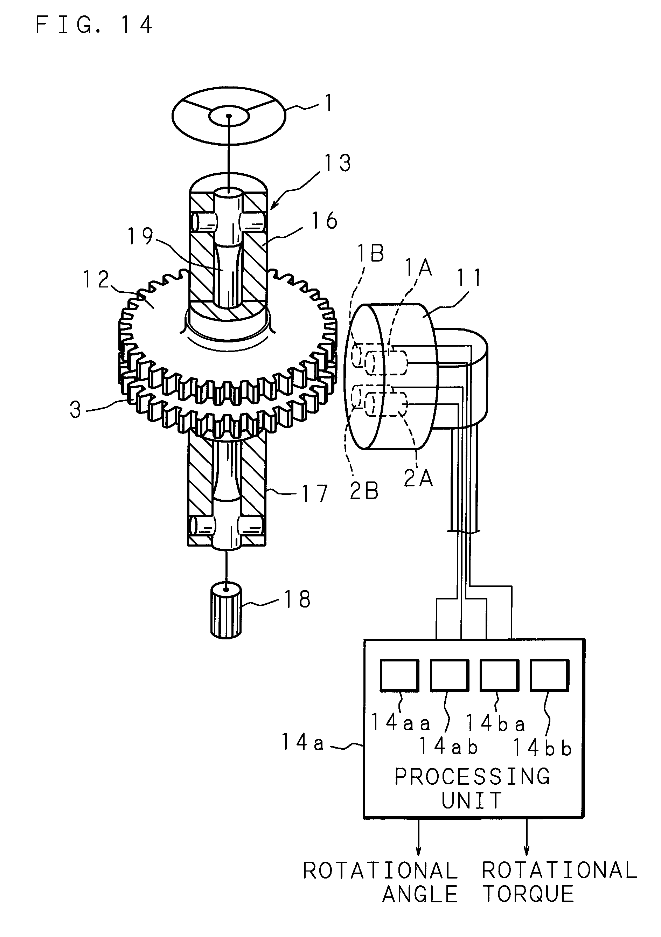

FIG. 14 is a schematic view showing schematically the construction of Embodiment 2 of the rotational angle detecting device, torque detecting device and steering apparatus according to the present invention. In these rotational angle detecting device and torque detecting device, the detection signals outputted by the magnetic sensors 1A, 1B, 2A, 2B (magneto-resistance effect elements) according to the passage of the corresponding adjacent targets 3 are supplied to a processing unit 14a. The processing unit 14a performs analog/digital conversion of the supplied detection signals, and inputs the resultant signals to built-in tables 14aa, 14ab, 14ba, 14bb (storing means) for the respective detection signals.

The tables 14aa, 14ab, 14ba, 14bb are formed by EPROM (Erasable and Programmable ROM) arranged in a matrix form so as to output digital signals corresponding to the input digital signals, respectively.

The detection signals that were actually outputted by the magnetic sensors 1A, 1B, 2A, 2B and detection signals to be outputted are stored in the tables 14aa, 14ab, 14ba, 14bb in association with each other at the manufacturing and assembly processes of the torque detecting device.

The tables 14aa, 14ab, 14ba, 14bb output the detection signals (digital signals) to be outputted, according to the detection signals (digital signals) outputted by the magnetic sensors 1A, 1B, 2A, 2B, respectively.

In particular, the detection signals of the magnetic sensors 1A, 1B, 2A, 2B are corrected by the tables 14aa, 14ab in switching the magnetic sensors 1A, 1B so that the switching is smoothly carried out without causing shift in the output signal values to be outputted, and by the tables 14ba, 14bb in switching the magnetic sensors 2A, 2B so that the switching is smoothly performed without causing shift in the output signal values to be outputted.

The processing unit 14a executes the operation of the processing unit 4 as explained in Embodiment 1, by using the detection signals of the magnetic sensors 1A, 1B, 2A, 2B which were corrected by the tables 14aa, 14ab, 14ba, 14bb.

Since other structures and operations of these rotational angle detecting device and torque detecting device are the same as those of the rotational angle detecting device and torque detecting device explained in Embodiment 1, similar parts are designated with the same reference numerals and their detailed explanation is omitted.

### Embodiment 3

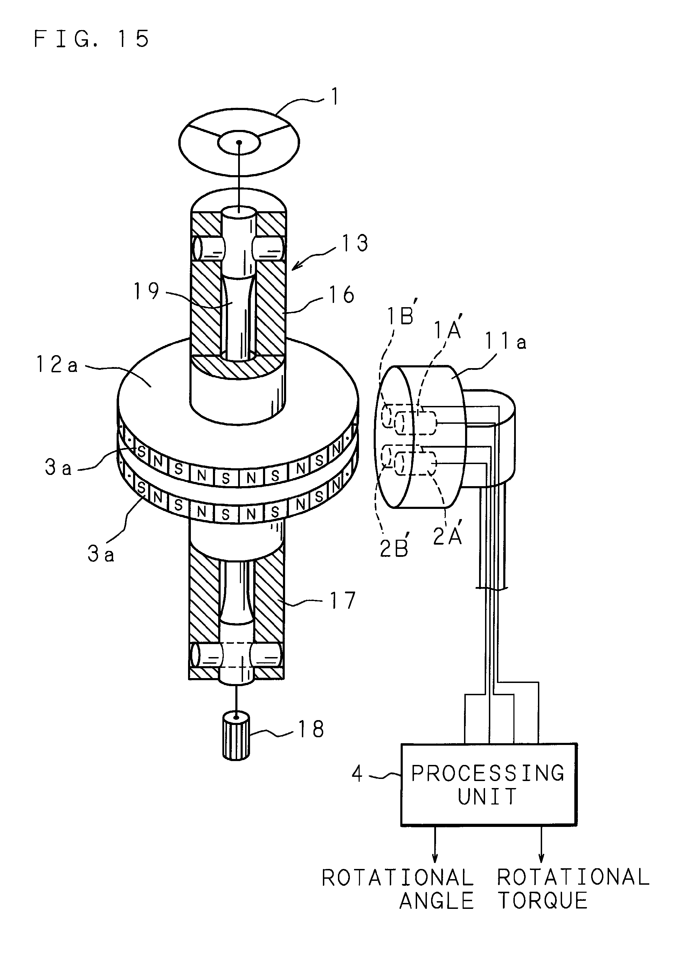

FIG. 15 is a schematic view showing schematically the construction of Embodiment 3 of the rotational angle detecting device, torque detecting device and steering apparatus according to the present invention. These rotational angle detecting device and torque detecting device are applied to a steering apparatus for automobiles, in which a disc-shaped target plate 12a (rotational member) is coaxially fitted and secured on the input shaft 16 at a position adjacent to one end portion connected to the output shaft 17, and targets 3a are formed on the outer circumferential surface of the target plate 12a by magnetizing the targets 3a so that the magnetic poles reverse at substantially equal intervals in a circumferential direction.

A target plate 12a with targets 3a similar to the one described above is also fitted and secured on the output shaft 17 at a position adjacent to one end portion connected to the input shaft 16. The targets 3a of the target plate 12a on the output shaft 17 side and the targets 3a of the target plate 12a on the input shaft 16 side are aligned and juxtaposed in the circumferential direction.

A sensor box 11a is disposed outside of both the target plates 12a so that it faces the outer edges of the targets 3a on the outer circumference of the target plates 12a. The sensor box 11a is fixedly supported on a stationary portion, such as a housing that supports the input shaft 16 and output shaft 17. Magnetic sensors 1A', 1B' (first detecting means, second detecting means) facing different portions in the circumferential direction of the targets 3a on the input shaft 16 side and magnetic sensors 2A', 2B' (first detecting means, second detecting means) facing different portions in the circumferential direction of the targets 3a on the output shaft 17 side are contained in the sensor box 11a so that their positions in the circumferential direction are correctly aligned.

Instead of forming the target 3a on the outer circumferential surface of each target plate 12a by magnetization, the target 3a may be formed on a surface lying in a radial direction of each target plate 12a. In this case, each of the magnetic sensors 1A', 2A', 1B' and 2B' is placed at a position facing a surface lying in a radial direction.

In the targets 3a, since the line of magnetic force from each N pole is absorbed by adjacent S pole, a strong magnetic field portion and a weak magnetic field portion are periodically produced.

Each of the magnetic sensors 1A', 2A', 1B', 2B' is a sensor for measuring the magnetic field strength, such as a Hall element, and outputs a detection signal approximately to a triangular wave or a sine wave similar to those of the magnetic sensors 1A, 2A, 1B, 2B of Embodiment 1, according to the passage of each target 3a.

Since other structures and operations are the same as those of Embodiment 1, similar parts are designated with the same reference numerals and their detailed explanation is omitted.

### Embodiment 4

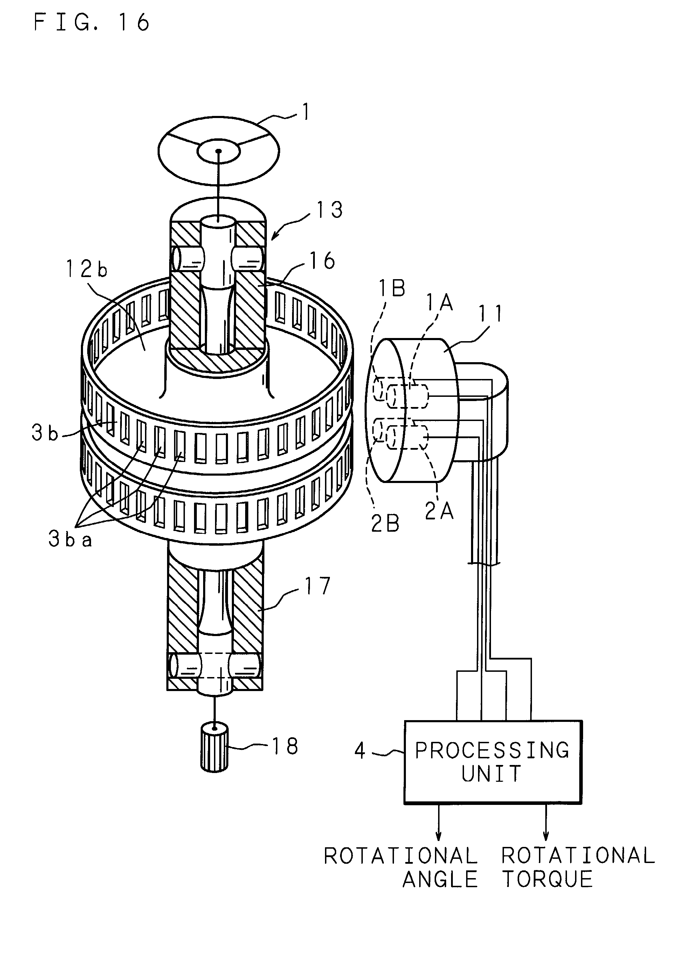

FIG. 16 is a schematic view showing schematically the construction of Embodiment 4 of the rotational angle detecting device, torque detecting device and steering apparatus according to the present invention. These rotational angle detecting device and torque detecting device are applied to a steering apparatus for automobiles, in which a disc-shaped target plate 12b (rotational member) is coaxially fitted and secured on the input shaft 16 at a position adjacent to one end portion connected to the output shaft 17.

The target plate 12b has a cylindrical portion. Targets 3b are formed by non-dent portions between dents 3ba that are formed in the outer circumferential surface of the cylindrical portion at substantially equal intervals in the circumferential direction so as to form the non-dent portions.

Each target 3b is formed by the non-dent portion between the dents 3ba made of rectangular through holes formed in the circumferential surface of the cylindrical portion of the target plate 12b made of magnetic material.

A target plate 12b having targets 3b similar to the one described above is also fitted and secured on the output shaft 17 at a position adjacent to one end portion connected to the input shaft 16. The targets 3b of the target plate 12b on the output shaft 17 side and the targets 3b of the target plate 12b on the input shaft 16 side are aligned and juxtaposed in the circumferential direction.

The sensor box 11 is disposed outside of both the target plates 12b so that it faces the outer edges of the targets 3b on the outer circumference of the target plates 12b. The sensor box 11 is fixedly supported on a stationary portion, such as a housing that supports the input shaft 16 and output shaft 17. Magnetic sensors 1A, 1B (first detecting means, second detecting means) facing different portions in the circumferential direction of the targets 3b on the input shaft 16 side and magnetic sensors 2A, 2B (first detecting means, second detecting means) facing different portions in the circumferential direction of the targets 3b on the output shaft 17 side are contained in the sensor box 11 so that their positions in the circumferential direction are correctly aligned.

Note that the dent 3ba of the target 3b may be a non-through hole instead of the through hole. Moreover, with the use of the input shaft 16 and output shaft 17 made of magnetic material, it is possible to form the dents 3ba of the targets 3b in the circumferential surfaces of the input shaft 16 and output shaft 17. Further, it is also possible to form the dent 3ba in a surface lying in a radial direction of the target plate 12b instead of the outer circumferential surface of the cylindrical portion of the target plate 12b. In this case, each of the magnetic sensors 1A, 2A, 1B and 2B is provided at a position facing a surface lying in the radial direction.

Each of the magnetic sensors 1A, 2A, 1B, 2B outputs a detection signal approximately to a triangular wave or a sine wave similar to those of the magnetic sensors 1A, 2A, 1B, 2B of Embodiment 1, according to the passage of the non-dent portion of each target 3b.

Since other structures and operations are the same as those of Embodiment 1, similar parts are designated with the same reference numerals and their detailed explanation is omitted.

According to the rotational angle detecting devices of the first through sixth inventions, it is possible to realize a rotational angle detecting device capable of detecting a rotational angle even when a sag portion exists in the characteristics of the detection signals of the detecting means and easily managing the accuracy of the detection signals of the detecting means at the manufacturing process.

According to the torque detecting devices of the seventh through tenth and twelfth inventions, it is possible to realize a torque detecting device capable of detecting a torque even when a sag portion exists in the characteristics of the detection signals of the detecting means and easily managing the accuracy of the detection signals of the detecting means at the manufacturing process.

According to the torque detecting device of the eleventh invention, it is possible to realize a torque detecting device that does not stop the detection of torque even when failure occurred, if the failure occurred in only one detecting means and the torque detection is available by the remaining detecting means.

According to the steering apparatus of the thirteenth invention, it is possible to realize a steering apparatus capable of detecting a torque even when a sag portion exists in the characteristics of the output voltages of the magnetic sensors of the torque detecting device and easily managing the accuracy of the output voltages of the magnetic sensors at the manufacturing process of the torque detecting device.

## Claims

1. A rotational angle detecting device, comprising first detecting means and second detecting means, **characterized in that**
one or a plurality of targets (3; 3a; 3b; 3c) are provided on a rotational member (12; 12a; 12b; 12c) so that said first detecting means (1A, 2A; 1A', 2A') outputs a detection signal according to a rotation of said rotational member (12; 12a; 12b; 12c),
said second detecting means (1B, 2B; 1B', 2B') outputs a detection signal whose phase is different from the detection signal of said first detecting means (1A, 2A; 1A', 2A'), and
a rotational angle of said rotational member (12; 12a; 12b; 12c) is detected based on the detection signals outputted by respective said first detecting means (1A, 2A; 1A', 2A') and said second detecting means (1B, 2B; 1B', 2B').

2. The rotational angle detecting device as set forth in Claim 1, **characterized in that** said targets (3) are made of protrusions provided at substantially equal intervals in a circumferential direction of said rotational member (12).

3. The rotational angle detecting device as set forth in Claim 1, **characterized in that** said targets (3b) are made of non-dent portions between dents (3ba) that are formed at substantially equal intervals in a circumferential direction of said rotational member (12b) so as to form said non-dent portions.

4. The rotational angle detecting device as set forth in Claim 1, **characterized in that** said targets (3a) are magnetized so that magnetic poles reverse at substantially equal intervals in a circumferential direction of said rotational member (12a).

5. The rotational angle detecting device as set forth in any one of Claims 1 through 4, **characterized by** further comprising:
judging means (4; 14a) for judging a relation in magnitude between detection signals outputted by said first detecting means (1A, 2A; 1A', 2A') and said second detecting means (1B, 2B; 1B', 2B') respectively in a previous cycle of sampling and a relation in magnitude between detection signals outputted by said first detecting means (1A, 2A; 1A', 2A') and said second detecting means (1B, 2B; 1B', 2B') respectively in this cycle of sampling;
judging means (4; 14a) for judging whether the detection signal outputted by said first detecting means (1A, 2A; 1A', 2A') or said second detecting means (1B, 2B; 1B', 2B') in this cycle of sampling is greater or less than a substantially middle value between maximum and minimum values to be taken by said detection signals; and
judging means (4; 14a) for judging whether or not each of the detection signals outputted by said first detecting means (1A, 2A; 1A', 2A') and said second detecting means (1B, 2B; 1B', 2B') in this cycle of sampling is within a predetermined range; whereby
a displacement angle in a direction of rotation of said rotational member (12; 12a; 12b; 12c) is detected based on results of judgments by said respective judging means (4; 14a).

6. The rotational angle detecting device as set forth in Claim 5, **characterized by** further comprising:
selecting means (4; 14a) for selecting either of said first detecting means (1A, 2A; 1A', 2A') and second detecting means (1B, 2B; 1B', 2B') and either of an increasing state and a decreasing state of a detection signal value to be outputted by said detecting means, based on results of judgments by said respective judging means (4; 14a), whereby
a displacement angle in a direction of rotation of said rotational member (12; 12a; 12b; 12c) is detected based on the detecting means and the state of the detection signal value selected by said selecting means in the previous cycle of sampling and the detection signals outputted by said selected detecting means in the previous cycle of sampling and this cycle of sampling, respectively.

7. A torque detecting device **characterized by** comprising said rotational angle detecting device of any one of Claims 1 through 6 for each of a first shaft (16) and a second shaft (17) which are connected by a connecting shaft (19), whereby
a torque applied to said first shaft (16) is detected based on a difference between detection signals outputted by said first detecting means (1A, 2A; 1A', 2A') or said second detecting means (1B, 2B; 1B', 2B') of each of said rotational angle detecting devices due to torsion generated in said connecting shaft (19).

8. The torque detecting device as set forth in Claim 7, **characterized by** further comprising:
sign judging means (4; 14a) for judging a sign of each of the difference between the detection signals outputted by said first detecting means (1A, 2A; 1A', 2A') and the difference between the detection signals outputted by said second detecting means (1B, 2B; 1B', 2B'); and
first comparing means (4; 14a) for comparing magnitudes of the detection signals outputted by said first detecting means (1A, 2A; 1A', 2A') and second detecting means (1B, 2B; 1B', 2B') on said first shaft (16) side when said sign judging means (4; 14a) judged that the signs of said differences were identical; whereby
a torque applied to said first shaft (16) is detected based on a result of comparison by said first comparing means (4; 14a).

9. The torque detecting device as set forth in Claim 8, **characterized by** further comprising:
second comparing means (4; 14a) for comparing magnitudes of a substantially middle value between maximum and minimum values to be taken by the detection signals and each of the detection signals outputted by said first detecting means (1A, 2A; 1A', 2A') and second detecting means (1B, 2B; 1B', 2B') on said first shaft (16) side when said sign judging means (4; 14a) judged that the signs of said differences were different, whereby
a torque applied to said first shaft (16) is detected based on a result of comparison by said second comparing means (4; 14a).

10. The torque detecting device as set forth in Claim 9, **characterized by** further comprising:
first judging means (4; 14a) for judging whether or not at least one of the detection signals outputted by said first detecting means (1A, 2A; 1A', 2A') is out of a predetermined range;
second judging means (4; 14a) for judging whether or not at least one of the detection signals outputted by said second detecting means (1B, 2B; 1B', 2B') is out of a predetermined range; and
third comparing means (4; 14a) for comparing magnitudes of an absolute value of a difference between the detection signals outputted by said first detecting means (1A, 2A; 1A', 2A') and an absolute value of a difference between the detection signals outputted by said second detecting means (1B, 2B; 1B', 2B'); whereby
a torque applied to said first shaft (16) is detected based on a result of comparison by said second comparing means (4; 14a), a result of judgment by said first judging means (4; 14a), a result of judgment by said second judging means (4; 14a), and a result of comparison by said third comparing means (4; 14a).

11. The torque detecting device as set forth in any one of Claims 7 through 10, **characterized by** further comprising:
abnormality detecting means (4; 14a) for detecting abnormality of detection signals outputted by each of a pair of said first detecting means (1A, 2A; 1A', 2A') and a pair of said second detecting means (1B, 2B; 1B', 2B'); and
means (4; 14a), when an abnormality was detected in one of said detection signals by said abnormality detecting means (4; 14a), for making a difference between the detection signals outputted by the pair of detecting means including the detecting means which outputted an abnormal detection signal zero; whereby
when there is one abnormal detection signal, a torque applied to said first shaft (16) is detected without using said one detection signal.

12. The torque detecting device as set forth in any one of Claims 7 through 11, **characterized by** further comprising:
storing means (14aa; 14ab; 14ba; 14bb) for storing the detection signals outputted by said first detecting means (1A, 2A; 1A', 2A') and said second detecting means (1B, 2B; 1B', 2B') and preset detection signals to be outputted according to each of the detection signals outputted by said first detecting means (1A, 2A; 1A', 2A') and said second detecting means (1B, 2B; 1B', 2B'), in association with each other; and
means (14a) for outputting said detection signals to be outputted, based on the detection signals outputted by said first detecting means (1A, 2A; 1A', 2A') and said second detecting means (1B, 2B; 1B', 2B') and contents stored in each of said storing means (14aa; 14ab; 14ba; 14bb), whereby
detection signals outputted by said means (14a) are made detection signals outputted by said first detecting means (1A, 2A; 1A', 2A') and said second detecting means (1B, 2B; 1B', 2B') respectively.

13. A steering apparatus **characterized by** comprising:
a first shaft (16) connected to a steering wheel;
a second shaft (17) connected to a steering mechanism;
a connecting shaft (19) connecting said first shaft (16) and said second shaft (17); and
said torque detecting device of any one of Claims 7 through 12 for detecting a steering torque applied to said first shaft (16), based on a torsional angle generated in said connecting shaft (19); whereby
steering is assisted according to the steering torque detected by said torque detecting device.
